(19) Europäisches Patentamt
European Patent Office
Office européen des brevets

(11) EP 2 196 920 A1

(12) **EUROPEAN PATENT APPLICATION**

(43) Date of publication:
**16.06.2010 Bulletin 2010/24**

(51) Int Cl.:
***G06F 17/30*** *(2006.01)*

(21) Application number: **09179156.6**

(22) Date of filing: **15.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **15.12.2008 JP 2008317914**

(71) Applicant: **Sony Corporation**
**Tokyo (JP)**

(72) Inventors:
- **Fukuya, Katsunari**
  **Tokyo (JP)**
- **Ando, Akira**
  **Tokyo (JP)**
- **Yamaoka, Kazuo**
  **Tokyo (JP)**
- **Matsumura, Eriko**
  **Tokyo**
  **(JP)**
- **Osawa, Muneaki**
  **Tokyo (JP)**
- **Aruga, Hiroshi**
  **Tokyo (JP)**
- **Matsuyama, Fuyuki**
  **Tokyo (JP)**
- **Inoue, Nobuhiro**
  **Tokyo (JP)**

(74) Representative: **Thévenet, Jean-Bruno et al**
**Cabinet Beau de Loménie**
**158, rue de l'Université**
**75340 Paris Cédex 07 (FR)**

(54) **Information processing device and method, and program**

(57) An information processing device which displays on a map a plurality of images classified by hierarchical clustering and associated with positional information includes a deciding unit (162b) configured to decide clusters satisfying a predetermined condition from among clusters created by the hierarchical clustering as the same group and a display control unit (139) configured to perform control such that the clusters belonging to the group are displayed on a reduced scale map based on positional information of the respective clusters belonging to the group.

FIG. 16

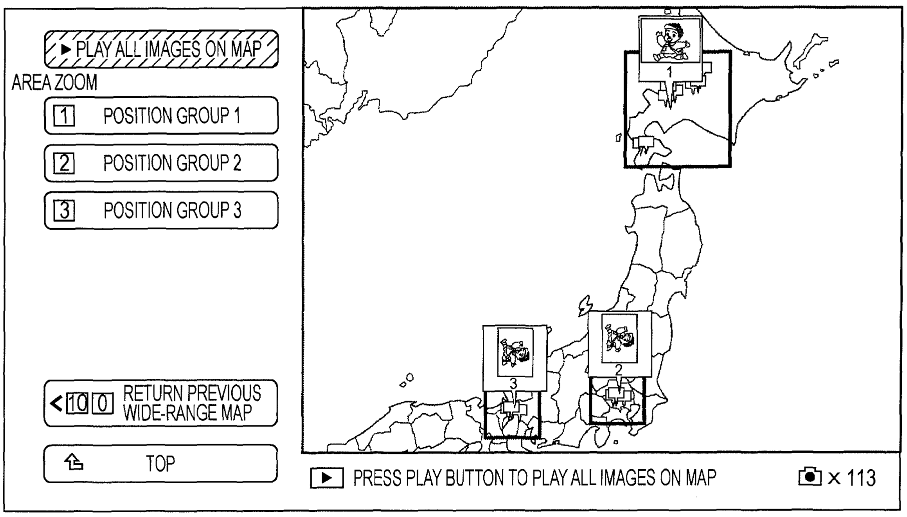


EP 2 196 920 A1

## Description

BACKGROUND OF THE INVENTION

1. Field of the Invention

The present invention relates to information processing device and method, and a program, and in particular, to information processing device and method, and a program which are capable of displaying images grouped according to positional information so as to be more recognizable.

2. Description of the Related Art

In recent years, a method has been suggested in which additional information, such as a photographing location or photographing date and time, is appended to images photographed by a digital camera or the like, and the images are managed or displayed on the basis of the additional information.

For example, a method has been suggested in which thumbnails of images are mapped onto a map and displayed on the basis of information regarding the locations where the images are photographed (for example, see Japanese Unexamined Patent Application Publication No. 2005-110111).

SUMMARY OF THE INVENTION

According to the method described in Japanese Unexamined Patent Application Publication No. 2005-110111, when the locations where a plurality of images are photographed are concentrated, multiple images are displayed on the map, and the relationship between the photographing locations and the positions on the map is unlikely to be recognized.

It is desirable to display images grouped according to positional information so as to be more recognizable.

An embodiment of the invention provides an information processing device which displays on a map a plurality of images classified by hierarchical clustering and associated with positional information. The information processing device includes deciding means for deciding clusters satisfying a predetermined condition from among clusters created by the hierarchical clustering as the same group, and display control means for performing control such that the clusters belonging to the group are displayed on a reduced scale map based on positional information of the respective clusters belonging to the group.

The display control means may perform control such that a representative image selected from at least one image included in each cluster is displayed at a position based on the positional information of each cluster belonging to the group on the reduced scale map based on the positional information of the respective clusters belonging to the group.

The positional information of each cluster may be information based on positional information of the image included in each cluster.

The predetermined condition may be a condition regarding the range of density of child clusters included in each cluster, and the deciding means may calculate the density of child clusters included in each cluster, and may decide clusters, in which the calculated density falls within a predetermined range, as the same group.

The information processing device may further include clustering means for clustering the images associated with the positional information to a binary tree structure in accordance with distances based on the positional information.

The information processing device may further include input means for inputting an instruction to select one of the clusters being displayed. The display control means may perform control such that, on a reduced scale map based on positional information of respective clusters belonging to a lower layer group in a hierarchy lower than that of the group to which the cluster selected in accordance with the instruction by the input means belongs, the clusters belonging to the lower layer group are displayed.

The input means may instruct to display clusters belonging to an upper layer group in a hierarchy higher than that of the group to which the clusters being displayed belong, and the display control means may perform control on the basis of the instruction by the input means such that the clusters belonging to the upper layer group are displayed on a reduced scale map based on positional information of the respective clusters belonging to the upper layer group.

The input means may be a remote controller.

Another embodiment of the invention provides an information processing method for an information processing device which displays on a map a plurality of images classified by hierarchical clustering and associated with positional information. The method includes the steps of deciding clusters satisfying a predetermined condition from among clusters created by the hierarchical clustering as the same group, and performing control such that the clusters belonging to the group are displayed on a reduced scale map based on positional information of the respective clusters belonging to the group.

Yet another embodiment of the invention provides a program which causes a computer to execute a process of an information processing device, which displays on a map a plurality of images classified by hierarchical clustering and associated with positional information. The process includes the steps of deciding clusters satisfying a predetermined condition from among clusters created by the hierarchical clustering as the same group, and performing control such that the clusters belonging to the group are displayed on a reduced scale map based on positional information of the respective clusters belonging to the group.

According to the embodiments of the invention, clusters satisfying a predetermined condition from among clusters created by hierarchical clustering are decided as the same group, and control is performed such that the clusters belonging to the group are displayed on a reduced scale map based on positional information of the respective clusters belonging to the group.

According to the embodiments of the invention, images grouped according to positional information can be displayed so as to be more recognizable.

BRIEF DESCRIPTION OF THE DRAWINGS

Fig. 1 is a block diagram showing a functional configuration example of an image display device as an embodiment of an information processing device to which the invention is applied;

Fig. 2 is a block diagram showing an appearance configuration example of an operation input section of Fig. 1;

Fig. 3 is a diagram illustrating an example of clustering of multiple images;

Fig. 4 is a flowchart illustrating an image grouping process;

Fig. 5 is a flowchart illustrating an image clustering process;

Fig. 6 is a diagram illustrating an image clustering process;

Fig. 7 is a diagram illustrating an image clustering process;

Fig. 8 is a diagram illustrating an image clustering process;

Fig. 9 is a diagram illustrating an image clustering process;

Fig. 10 is a diagram illustrating an image clustering process;

Fig. 11 is a diagram conceptually showing a binary tree which represents binary tree structure data;

Fig. 12 is a diagram illustrating cluster data regarding a cluster;

Fig. 13 is a diagram illustrating grouping according to a grouping condition;

Fig. 14 is a diagram illustrating grouping according to a grouping condition;

Fig. 15 is a flowchart illustrating a display control process of grouped images;

Fig. 16 is a diagram showing a display example of a display section;

Fig. 17 is a diagram showing a display example of a display section;

Fig. 18 is a diagram showing a display example of a display section;

Fig. 19 is a diagram showing a display example of a display section;

Fig. 20 is a diagram showing a display example of a display section;

Fig. 21 is a diagram showing a display example of a display section;

Fig. 22 is a diagram showing a display example of a display section;

Fig. 23 is a diagram showing a display example of a display section;

Fig. 24 is a block diagram showing a functional configuration example of an image display system; and

Fig. 25 is a block diagram showing a hardware configuration example of a computer.

DESCRIPTION OF THE PREFERRED EMBODIMENTS

Hereinafter, an embodiment of the invention will be described with reference to the drawings.

[Configuration Example of Image Display Device]

Fig. 1 shows a functional configuration example of an image display device as an embodiment of an information processing device to which the invention is applied.

An image display device 101 of Fig. 1 includes a data communication section 131, a recording section 132, a positional information acquiring section 133, an arithmetic section 134, an operation input section 135, a light receiving section 136, a condition setting section 137, a network communication section 138, a display control section 139, and a display section 140.

In Fig. 1, the operation input section 135 is shown outside the image display device 101, but it is regarded as being included in the image display device 101.

The data communication section 131 acquires (receives) data supplied (transmitted) from an external apparatus, and supplies data to the recording section 132. Specifically, the data communication section 131 acquires image data (hereinafter, also referred to as simply "image") supplied from a digital camera (not shown) or the like, and supplies image data to the recording section 132.

Hereinafter, description will be made assuming that image data (image) is a still image.

The recording section 132 is, for example, a hard disk or an optical disk, and records various kinds of data. The recording section 132 includes image database (DB) 151, a binary tree database (DB) 152, and a cluster database (DB) 153.

The image DB 151 records image data supplied from the data communication section 131. An Exif (Exchangeable Image File Format) tag is stored in image data recorded in the image DB 151 and additional information, such as positional information of a position where an image is photographed, photographing date and time representing date and time when an image is photographed is recorded in the Exif tag. When an image is photographed by a photographing device with a GPS (Global Positioning System) function, positional information includes latitude, longitude, and altitude.

The binary tree DB 152 records binary tree structure data clustered from image data by the arithmetic section 134. The cluster DB 153 records cluster data for each cluster corresponding to the hierarchy of each node of binary tree structure data generated by the arithmetic section 134. Details of binary tree structure data and cluster data will be described below.

The recording section 132 records a control program (not shown). The control program is executed by the image display device 101 as occasion demands.

The positional information acquiring section 133 acquires image data recorded in the image DB 151, acquires positional information from the Exif tag stored in image data, and supplies image data and positional information to the arithmetic section 134.

The arithmetic section 134 includes a clustering section 161 and a hierarchy deciding section 162.

The clustering section 161 classifies image data recorded in the image DB 151 by clustering (hierarchical clustering). In this embodiment, during clustering, binary tree structure data is used in which each image data is set as a leaf. In binary tree structure data, nodes correspond to clusters. The clustering section 161 performs clustering on the basis of positional information supplied from the positional information acquiring section 133 such that each cluster of binary tree structure data has a hierarchical structure, and supplies binary tree structure data to the binary tree DB 152.

The clustering section 161 includes a distance calculating section 161a and a cluster creating section 161b. The distance calculating section 161a calculates the distance between image data on the basis of positional information supplied from the positional information acquiring section 133, and the cluster creating section 161b creates a cluster on the basis of the calculated distance between image data. The distance calculating section 161a also calculates the distance between the clusters created by the cluster creating section 161b. The cluster creating section 161b creates a cluster on the basis of the calculated distance between the clusters. In this way, the distance between image data and the distance between the clusters are sequentially calculated so as to create binary tree structure data.

The hierarchy deciding section 162 decides a node satisfying a grouping condition set by the condition setting section 137 from among the nodes of binary tree structure data recorded in the binary tree DB 152, and sets image data corresponding to leaves belonging to the decided node as one group. The grouping condition is the condition for grouping (images included in) respective clusters of binary tree structure data recorded in the binary tree DB 152 into appropriate image groups according to the user's preference.

The hierarchy deciding section 162 includes a density calculating section 162a and a deciding section 162b. The density calculating section 162a calculates the density of image data in the clusters (or clusters) corresponding to the nodes of binary tree structure data recorded in the binary tree DB 152 for each node. The deciding section 162b decides a node in which the calculated density of image data (or clusters) satisfies the grouping condition.

In this way, the hierarchy deciding section 162 decides a cluster satisfying the grouping condition from among the clusters created by clustering so as to decide a desired cluster from among a plurality of clusters into an appropriate group.

In the above description, a plurality of images constitute a cluster, but it is also assumed that one image constitute a single cluster.

The operation input section 135 is a so-called remote controller. A user presses various buttons, such as a cross key, an OK button, and the like, so a control signal (command (hereinafter, also referred to operation command)) for controlling the image display device 101 is generated. The operation input section 135 transmits the generated operation command to the light receiving section 136 by infrared rays, for example.

The light receiving section 136 receives the operation command transmitted from the operation input section 135 by infrared rays, for example, and supplies the operation command to the condition setting section 137 and the display control section 139.

When an operation command regarding a grouping condition is supplied from the operation input section 135 through the light receiving section 136, the condition setting section 137 stores the grouping condition corresponding to the operation command and also supplies the grouping condition to the hierarchy deciding section 162. The condition setting section 137 may store an operation of the user or a past grouping history, may set a grouping condition on the basis of the history or the like, and may supply the set grouping condition to the hierarchy deciding section 162.

The network communication section 138 communicates with another apparatus, such as a Web server or the like, through Internet so as to acquire map data and supplies map data to the display control section 139.

The display control section 139 controls display of the display section 140 in accordance with an operation command supplied from the operation input section 135 through the light receiving section 136. The display control section 139 includes a map managing section 181, a hierarchy managing section 182, an image reading section 183, and a combining section 184.

The map managing section 181 manages map data supplied from the network communication section 138 by country or area.

The hierarchy managing section 182 reads cluster data recorded in the cluster DB 153 and, if necessary, selects a group (cluster) of cluster data according to an operation command supplied from the operation input section 135 through the light receiving section 136.

The image reading section 183 reads, from the image DB 151, image data corresponding (included in) a group selected by the hierarchy managing section 182.

The combining section 184 reads, from the map managing section 181, map data based on positional information of image data read by the image reading section 183, combines map data and image data read by the image reading section 183, and supplies the combined image to the display section 140.

The display section 140 is formed by, for example, an LCD (Liquid Crystal Display), and displays images under the control of the display control section 139. [Appearance Configuration Example of Operation Input Section]

An appearance configuration example of the operation input section 135 in Fig. 1 will be described with reference to Fig. 2.

As shown in Fig. 2, the operation input section 135 which is a remote controller is provided with a cross key 211, an OK button 212, a menu button 213, a power button 214, a light emitting section 215, and other buttons.

The cross key 211 is operated (direction operation) in four directions of up, down, left, and right by the user when the user selects an item displayed on the display section 140.

The OK button 212 is operated (decision operation) when the user decides an item displayed on the display section 140 and selected by the user's operation of the cross key 211.

The menu button 213 is operated to display a menu screen for inputting various settings or a predetermined operation command on the display section 140.

When the menu screen is displayed, items on the menu screen are displayed on the display section 140. The user can operate the cross key 211 to select a predetermined item, and can operate the OK button to decide the selection of the item.

The power button 214 is operated to power on or off the image display device 101.

When the operation input section 135 is operated, the light emitting section 215 outputs (transmits) a control signal (operation command) representing the operation by infrared rays.

Other buttons include numeral keys (keypad), a volume button, a channel button, a play button, a record button, and the like, and descriptions thereof will be omitted.

[Example of Clustering of Multiple Images]

An example of clustering of multiple images will be described with reference to Fig. 3.

Fig. 3 shows the overview of clusters, to which one or multiple images belong, on a space (two-dimensional space) corresponding to positional information included in the Exif tag of an image. In Fig. 3, each cluster which is created after multiple images are clustered on the basis of positional information thereof is indicated by a circular region, and has the center position (center point) and radius of the circle as attribute values. Images belonging to the cluster are included in the circular region (cluster region) defined by the center point and radius.

In the state A of Fig. 3, one image belongs to a cluster 331, and the center position of the cluster 331 is the position of the image belonging to the cluster 331. The radius of the cluster 331 is 0 (r=0).

In the state B of Fig. 3, two images belong to a cluster 334 as clusters 332 and 333, and the center position 335 of the cluster 334 is the center position of a line connecting the positions of the two images. The radius of the cluster 334 is half of the line connecting the positions of the two images. For example, when the length of the line connecting the clusters 332 and 333 corresponding to the two images is R1, the radius is R1/2 (r=R1/2). During clustering, when the distance between clusters to which only one image belongs is calculated, the distance between the images is calculated. For example, when the distance between the clusters 332 and 333 is calculated, the distance between the position of an image belonging to the cluster 332 and the position of an image belonging to the cluster 333 is calculated.

In the state C of Fig. 3, at least four images belong to a cluster 340, and the center position 341 of the cluster 340 is a center position of a line connecting a position 342 where the circle of the cluster 340 and the circle of a cluster 336 are tangent to each other and a position 343 where the circle of the cluster 340 and the circle of a cluster 337 are tangent to each other, on a line connecting the center position 338 of the cluster 336 and the center position 339 of the cluster 337. The clusters 336 and 337 respectively have at least two images. The radius of the cluster 340 is half of the line connecting the position 342 and the position 343. During clustering, when the distance between the clusters to which multiple images belong is calculated, the shortest distance between the circumferences of the circles of the respective clusters is calculated. For example, the distance between the clusters 336 and 337 is the distance d between the position 344 on the circle of the cluster 336 and the position 345 on the circle of the cluster 337 on the line connecting the position 342 and the position 343. When the radius of the cluster 336 is R2, the radius of the cluster 337 is R3, and the radius of the cluster 340 is R4, the distance d between the clusters 336 and 337 is 2(A4-A2-A3).

[Image Grouping Process]

Next, an image grouping process in the image display device 101 will be described with reference to a flowchart of Fig. 4. The image grouping process starts, for example, when the user operates the operation input section 135 and an item is selected on the menu screen displayed on the display section 140 to execute the image grouping process.

In Step S31, the positional information acquiring section 133 acquires an image recorded in advance in the image DB 151, acquires positional information from the Exif tag stored in the image, and supplies image data and positional information to the arithmetic section 134.

In Step S32, the clustering section 161 of the arithmetic section 134 executes a clustering process on the image recorded in the image DB 151.

[Image Clustering Process]

The image clustering process by the clustering section 161 will be described with reference to a flowchart of Fig. 5 and Figs. 6 to 11.

In Step S61, the distance calculating section 161a of the clustering section 161 calculates the distance between images as clusters on the basis of positional information supplied from the positional information acquiring section 133.

For example, when images 351 to 355 recorded in the image DB 151 are arranged on a virtual plane shown in Fig. 6 on the basis of positional information thereof, the distance calculating section 161a calculates the distances between the images 351 to 355.

In Step S62, the cluster creating section 161b creates clusters on the basis of the distances between the clusters as the calculation result of the distance calculating section 161a.

For example, as shown in Fig. 7, the cluster creating section 161b creates a cluster 361 by the images 351 and 352 having the shortest distance between the clusters.

In Step S63, the clustering section 161 determines whether or not there is a cluster which is not clustered.

The state where "there is a cluster which is not clustered" indicates a state where a cluster (including a single image) can be clustered with another cluster. Therefore, the state where there is no cluster which is not clustered refers to a state where images as the minimum cluster unit are clustered into one cluster.

That is, in the example of Fig. 7, the images 353 to 355 and the cluster 361 are not clustered, so the process returns to Step S61.

In the second round of Step S61, the distance calculating section 161a calculates the distances between the images 353 to 355 and the cluster 361.

In the second round of Step S62, the cluster creating section 161b creates a cluster 362 by the images 353 and 354 having the shortest distance from among the distances between images and clusters on the basis of the calculation result of the distance calculating section 161a, as shown in Fig. 8.

In the second round of Step S63, the clustering section 161 determines whether or not there is a cluster which is not clustered.

In the example of Fig. 8, the image 355, the cluster 361, and the cluster 362 are not clustered, so the process returns to Step S61 again.

In the third round of Step S61, the distance calculating section 161a calculates the distances between the image 355, the cluster 361, and the cluster 362.

In the third round of Step S62, the cluster creating section 161b creates a cluster 363 by the image 355 and the cluster 361 having the shortest distance from among the distances between images and clusters on the basis of the calculation result of the distance calculating section 161a, as shown in Fig. 9.

In the third round of Step S63, the clustering section 161 determines whether or not there is a cluster which is not clustered.

In this case, the cluster 362 and the cluster 363 are not clustered, so the process returns to Step S61 again.

Then, with the fourth round of Steps S61 and S62, a cluster 364 shown in Fig. 10 is created. In the fourth round of Step S63, it is determined that there is no cluster which is not clustered, so the process progresses to Step S64.

In Step S64, the clustering section 161 creates binary tree structure data on the basis of the clusters created by the cluster creating section 161b, and then the process returns to Step S32 of Fig. 4. For example, the clustering section 161 creates binary tree structure data on the basis of the clusters 361 to 364 created by the cluster creating section 161b.

Fig. 11 conceptually shows a binary tree representing binary tree structure data created on the basis of the clusters 361 to 364.

In the binary tree of Fig. 11, images and leaves correspond to each other, and clusters and nodes correspond to each other. In Fig. 11, the leaves corresponding to the images 351 to 355 are numbered identical to the images, and the nodes corresponding to the clusters 361 to 364 are numbered identical to the clusters. Each of the images 351 to 355 constitutes a cluster independently, but in this case, the numbers of the clusters are not particularly shown.

Cluster data regarding each cluster created by the above-described clustering process will be described with reference to Fig. 12.

Cluster data shown in Fig. 12 is unique information regarding a created cluster, and a cluster ID, a cluster center position, a cluster radius, the number of images, an image list, and a child cluster list are recorded. It is assumed that each image is given an image ID as an image identifier.

The cluster ID represents the identifier of a cluster corresponding to cluster data, and for example, is the four-digit integer value "0001". The cluster center position represents the center position of a cluster corresponding to cluster data, and for example, is the latitude "N39.49329987" and the longitude "E141.239801" corresponding to the center position of the cluster. The cluster radius represents the radius of a cluster corresponding to cluster data, and for example, is the value "56.26" in the unit of meters (m). The number of images represents the number of images included in the cluster region of a cluster corresponding to cluster data, and for example, is "12". The image list represents image IDs (integer values) of images included in the cluster region of a cluster corresponding to cluster data, and for example, is the image IDs of 12 images, "1, 2, 5, 6, 7, 8, 9, 14, 15, 16, 17, 23".

The child cluster list represents the cluster IDs of clusters (child clusters) included in the cluster region of a cluster corresponding to cluster data, and for example, is cluster IDs of two clusters, "0002, 0007". That is, the child cluster list represents the cluster IDs of clusters in a hierarchy lower than the cluster.

In addition to the above-described data, metadata of images belonging to a cluster or statistical information of images may be included in cluster data by images or applications. Cluster data is data regarding binary tree structure data, and is recorded in the binary tree DB 152 together with binary tree structure data.

With regard to each image, an image ID and a cluster ID to which the image belongs may be appended as metadata. When a cluster ID is appended as metadata of an image, the cluster ID may be embedded into the image itself by using a file region, such as Exif or the like, and only metadata of an image may be managed separately.

Returning to the flowchart of Fig. 4, in Step S33, the density calculating section 162a of the hierarchy deciding section 162 calculates the cluster density in the clusters corresponding to the nodes of binary tree structure data recorded in the binary tree DB 152 for each node.

For example, the density calculating section 162a calculates the cluster density in the cluster corresponding to each node of binary tree structure data recorded in the binary tree DB 152 by using Equation (1) described below.

$$D_C = n_C/S_C \ldots (1)$$

For Equation (1), $D_C$ represents the density of a cluster C, $n_C$ represents the number of images included in the cluster C, and $S_C$ represents the area of the cluster C. The area $S_C$ of the cluster is calculated on the basis of the radius of the cluster. For example, in the binary tree of Fig. 11, the cluster density of each of the clusters 361 to 364 corresponding to the nodes is calculated.

In Step S34, the deciding section 162b determines whether or not the cluster density calculated for a predetermined cluster (cluster of interest) satisfies the grouping condition supplied from the condition setting section 137.

In Step S34, when it is determined that the cluster density satisfies the grouping condition, the process progresses to Step S35, and the deciding section 162b decides that a node (node of interest) corresponding to the cluster of interest is a node satisfying the grouping condition.

In Step S34, when it is determined that the cluster density does not satisfy the grouping condition, the process skips Step S35.

In Step S36, the hierarchy deciding section 162 determines whether or not the node of interest corresponding to the cluster of interest is a root node.

In Step S36, when it is determined that the node of interest corresponding to the cluster of interest is not the root node, the process progresses to Step S37. In Step S37, the hierarchy deciding section 162 moves to another node other than the node of interest, and the process returns to Step S34. That is, the hierarchy deciding section 162 sets another node as a node of interest and performs the process of Steps S34 to S36 on the node.

In Step S36, when it is determined that the node of interest corresponding to the cluster of interest is the root node, the process progresses to Step S38, and the hierarchy deciding section 162 records cluster data corresponding to the cluster of interest in the cluster DB 153.

Specifically, for example, in Steps S34 to S37, first, the deciding section 162b sequentially determines whether or not a cluster corresponding to a node satisfies Equation (2) starting with a node in the lower hierarchy of binary tree structure data recorded in the binary tree DB 152.

$$D_L \leq D_C < D_H \ldots (2)$$

For Equation (2), the values $D_L$ and $D_H$ are the lower limit value and upper limit value of the cluster density $D_C$ for defining a group satisfying the grouping condition. For example, when the values $D_L$ and $D_H$ are set to comparatively small values, a node corresponding to a cluster having a comparatively small cluster density $D_C$ is decided. When the values $D_L$ and $D_H$ are set to comparatively large values, a node corresponding to a cluster having a comparatively large cluster density $D_C$ is decided.

When the difference between the values $D_L$ and $D_H$ is set to become small, only clusters having comparatively approximate cluster densities $D_C$ satisfy the condition, and the number of nodes to be decides is comparatively small. When the difference between the values $D_L$ and $D_H$ is set to become large, clusters having comparatively distant cluster densities $D_C$ satisfy the condition, so the number of nodes to be decided becomes comparatively large.

For example, when the values $D_L$ and $D_H$ are set to comparatively small values, as shown in Fig. 13, a cluster 380 (a cluster having a comparatively small cluster density $D_C$) having images 371 to 375 sparsely distributed becomes one group.

When the values $D_L$ and $D_H$ are set to comparatively large values, as shown in Fig. 14, each of clusters 381 and 385 (clusters having a comparatively large cluster density $D_C$) in which multiple images (in the drawing, indicated by a double circle) are concentrated on the same position or a narrow range becomes one group.

The values $D_L$ and $D_H$ may be set in advance or may be appropriately set by the user.

Therefore, in the binary tree of Fig. 11, for the clusters 361 and 362 corresponding to a node in the lowest hierarchy, it is sequentially determined whether or not the cluster density satisfies Equation (2).

For example, with regard to the clusters 361 and 362, when the cluster density of the cluster 361 does not satisfy Equation (2), and the cluster density of the cluster 362 satisfies Equation (2), it is decided that the node corresponding to the cluster 362 satisfies the condition, but with regard to the cluster 361, it is not decided that the condition is satisfied. In this case, it is determined whether or not the cluster density of the cluster 363 corresponding to the node in the hierarchy higher than the cluster 361 satisfies Equation (2).

When the cluster density of the cluster 363 satisfies Equation (2), it is decided that the node corresponding to the cluster 363 satisfies the condition, together with the node corresponding to the cluster 362, and the cluster 362 and the cluster 363 belong to a group in the same hierarchy. It is determined whether or not the cluster density of the cluster 364 (root node) corresponding to the node in the hierarchy higher than the cluster 362 and the cluster 363 satisfies Equation (2). If Equation (2) is satisfied, the cluster 364 becomes one group.

In this case, only cluster data regarding the grouped clusters 362, 363, and 364 is supplied to the cluster DB 153.

In this case, it can be said that the cluster 362 and the cluster 363 are the groups in the hierarchy next below the cluster 364, and the cluster 364 is the group in the hierarchy next above the cluster 362 and the cluster 363. The cluster 363 originally includes the cluster 361, but through the above-described process, the cluster 363 becomes a group including only the images 351, 352, and 355.

As described above, a cluster having the cluster density satisfying Equation (2) becomes one group. With regard to a cluster having the cluster density not satisfying Equation (2), it is sequentially determined for a cluster in the hierarchy higher than the relevant cluster whether or not the cluster density satisfies Equation (2), so a group of a hierarchical structure satisfying the grouping condition is obtained.

According to the above-described process, clusters of binary tree structure data can be grouped into a new image group in accordance with the user's preference.

[Image Display Control Process]

Next, a display control process of images grouped by the above-described grouping process will be described with reference to a flowchart of Fig. 15.

In Step S101, the network communication section 138 communicates with the Web server through Internet so as to acquire map data, and supplies map data to the map managing section 181 of the display control section 139.

In Step S102, the hierarchy managing section 182 of the display control section 139 reads cluster data recorded in the cluster DB 153.

In Step S103, the image reading section 183 reads, from the image DB 151, a representative image of images included in the child groups of the root node in cluster data read by the hierarchy managing section 182. For example, the image reading section 183 selects, as the representative image, an image having the earliest photographing time and date from among at least one image included in the image list of cluster data corresponding to each group (child group), and reads the image from the image DB 151. The representative image is not limited to the image having the earliest photographing date and time from among the images included in the group. For example, the representative image may be an image having the latest image ID in the image list of cluster data, or may be designated in advance by the user. In this case, in addition to the representative image of each group, the image reading section 183 reads images included in the group from the image DB 151.

In Step S104, the combining section 184 combines a reduced scale map based on positional information of each group and the icons and representative image representing the images included in each group at a position corresponding to positional information of each group on the map, and displays the combined image on the display section 140.

Specifically, the combining section 184 acquires cluster data of a cluster corresponding to each group from cluster data read by the hierarchy managing section 182, and sets the cluster center position in cluster data as positional information of each group. The combining section 184 acquires map data from the map managing section 181, and generates a reduced scale map in which all the positions corresponding to the positional information of the respective groups are included with a certain margin. The combining section 184 acquires positional information of images including the representative image of each group read by the image reading section 183. The combining section 184 combines the generated map and the icons and representative image representing the images included in each group at the position corresponding to positional information of the images including the representative image of each group on the map, and displays the combined image on the display section 140, as shown in Fig. 16. The number of images represented by icons becomes the number according to the scale of the map to be displayed.

In Fig. 16, a predetermined reduced scale map is displayed at the right portion, and the icons and representative image representing the images included in each child group of the root node are displayed at a corresponding one of three locations on the map, together with a frame defining the range of the relevant group. The representative images at the three locations (three groups) on the map of Fig. 16 are allocated with the numbers 1 to 3, which represent the numbers of the respective groups.

In Fig. 16, a menu screen is displayed at the left portion. On the menu screen of Fig. 16, the items "PLAY ALL IMAGES ON MAP", "1 POSITION GROUP 1", "2 POSITION GROUP 2", "3 POSITION GROUP 3", "10 0 RETURN TO PREVIOUS WIDE-RANGE MAP", AND "TOP" are displayed. The items "1 POSITION GROUP 1", "2 POSITION GROUP 2", and "3 POSITION GROUP 3" correspond to three groups on the above-described map. The user operates the cross key 211 of the operation input section 135 in the up, down, left or right direction and then operates the OK button 212 to select and decide each item. On the display section 140, an item selected by operating the cross key 211 is highlighted. In Fig. 16, the groups being displayed are child groups of the root node, and there is no group in the hierarchy higher than the groups, so the item "10 0 RETURN TO PREVIOUS WIDE-RANGE MAP" is not selectable. The items appended with a numeral in front of an item name are selected by operating a numeric key (keypad) of the operation input section 135.

In Fig. 16, the sentence "PRESS PLAY BUTTON TO PLAY ALL IMAGES ON MAP" and "(ICON REPRESENTING CAMERA)×113" are displayed at the lower-end portion. The numeral "113" represents the number of images included in all the groups on the map being currently displayed.

Returning to the flowchart of Fig. 15, in Step S105, the display control section 139 determines where or not any group is selected by an operation of the user. That is, the display control section 139 determines whether or not an operation command purporting that any group is selected is supplied from the operation input section 135 through the light receiving section 136.

In Step S105, when it is determined that an operation command purporting that any group is selected is not supplied, the process skips Steps S106 to S108 and progresses to Step S109.

In Step S105, when it is determined that an operation command purporting that any group is selected is supplied, the hierarchy managing section 182 selects a group according to the operation command, and the process progresses to Step S106. In this case, for example, if the user operates the cross key 211 of the operation input section 135 and then operates the OK button 212 on the display section 140 to select and decide "1 POSITION GROUP 1", as shown in Fig. 17, the representative image of the corresponding group on the map is displayed in enlarged scale.

In Step S106, the hierarchy managing section 182 determines whether or not there are only leaves (images) as the minimum cluster unit in the selected group.

In Step S106, when it is determined that there are not only leaves in the selected group, the process progresses to Step S107. In Step S107, the image reading section 183 reads, from the image DB 151, the representative image of images included in a group in the hierarchy next below the group selected by the hierarchy managing section 182 and other images in cluster data read by the hierarchy managing section 182.

In Step S108, the combining section 184 combines a reduced scale map based on positional information of each group and the icons and representative image representing the images included in each group at the position corresponding to positional information of each group on the map, and displays the combined image on the display section 140, as shown in Fig. 18.

In Fig. 18, a reduced scale map corresponding to the position group 1 of Fig. 16 is displayed at the right portion, and the icons and representative representing the images included each child group of the position group 1 of Fig. 16 are displayed at a corresponding one of three locations on the map, together with a frame defining the range of the relevant group. Similarly to Fig. 16, the representative images at the three locations (three groups) on the map of Fig. 18 are allocated with the numbers 1 to 3, which represent the numbers of the respective groups.

In Fig. 18, similarly to Fig. 16, a menu screen is displayed at the left portion. In Fig. 18, unlike Fig. 16, there is a group in the hierarchy higher than the group being displayed, so the item "10 0 RETURN PREVIOUS WIDE-RANGE MAP" is selectable.

Returning to the flowchart of Fig. 15, in Step S109, the display control section 139 determines whether or not the item "PLAY ALL IMAGES ON MAP" on the menu screen of the display section 140 is selected by an operation of the user. That is, the display control section 139 determines whether or not an operation command purporting that the item "PLAY ALL IMAGES ON MAP" is selected is supplied from the operation input section 135 through the light receiving section 136. Alternatively, the display control section 139 may determine whether or not an operation command purporting that the user operates the play button is supplied from the operation input section 135 through the light receiving section 136.

In Step S109, when it is determined that the operation command purporting that the item "PLAY ALL IMAGES ON MAP" is selected is supplied, the process progresses to Step S110.

In Step S110, the image reading section 183 supplies the representative image of the images included in the group being currently displayed and other images to the display section 140, and the display section 140 displays the images in a slide show starting with an image having the latest image ID.

In Step S109, when it is determined that the operation command purporting that the item "PLAY ALL IMAGES ON MAP" is selected is not supplied, the process skips Step S110 and progresses to Step S111.

In Step S111, the display control section 139 determines whether or not the item "RETURN TO PREVIOUS WIDE-RANGE MAP" on the menu screen of the display section 140 is selected by an operation of the user. That is, the display control section 139 determines whether or not an operation command purporting that the item "RETURN TO PREVIOUS WIDE-RANGE MAP" is selected is supplied from the operation input section 135 through the light receiving section 136.

In Step S111, when it is determined that the operation command purporting that the item "RETURN TO PREVIOUS WIDE-RANGE MAP" is selected is supplied, the process progresses to Step S112.

In Step S112, the image reading section 183 reads, from the image DB 151, the representative image of images included in a group in the hierarchy next above the group being currently displayed on the display section 140 and other images in cluster data read by the hierarchy managing section 182. After Step S112, the process returns to Step S108, and the groups in the next hierarchy above are displayed. In Step S111, it is again determined whether or not the item "RETURN TO PREVIOUS WIDE-RANGE MAP" on the menu screen of the display section 140 is selected, but when the group in the hierarchy at that time is a child node of the root node, there is no group in the next hierarchy above, so the process automatically returns to Step S105.

In Step S111, when it is determined that the operation command purporting that the item "RETURN TO PREVIOUS WIDE-RANGE MAP" is not supplied, the process returns to Step S105, and the display control section 139 determines whether or not any group is selected by an operation of the user.

For example, in the display state of the display section 140 shown in Fig. 18, if the user operates the cross key 211 of the operation input section 135 and then operates the OK button 212 so as to select and decide the item "1 POSITION GROUP 1", for example, as shown in Fig. 19, the representative image of the corresponding group on the map is displayed in enlarged scale.

In Step S106, the hierarchy managing section 182 determines whether or not there are only leaves (images) in the selected group.

In Fig. 19, there are not only leaves in the selected and decided group, so the process progresses to Step S107. In Step S107, the image reading section 183 reads, from the image DB 151, the representative image of images included in a group in the hierarchy next below the group selected by the hierarchy managing section 182 and other images in cluster data read by the hierarchy managing section 182.

In Step S108, the combining section 184 combines a reduced scale map based on positional information of each group and the icons and representative image representing the images included in each group at the position corresponding to positional information of each group on the map, and displays the combined image on the display section 140, as shown in Fig. 20.

In Fig. 20, a reduced scale map corresponding to the position group 1 of Fig. 18 is displayed at the right portion, and the icons and representative image representing the images included in each child group of the position group 1 in Fig. 18 are respectively displayed at a corresponding one of four locations on the map, together with a frame defining the range of the relevant group. Similarly to Figs. 16 and 18, the representative images at the four locations (four groups) on the map of Fig. 20 are allocated with the numbers 1 to 4, which represent the numbers of the respective groups.

In Step S111, if it is determined that the item "RETURN TO PREVIOUS WIDE-RANGE MAP" is not selected, the process again returns to Step S105, and the display control section 139 determines whether or not any group is selected by an operation of the user.

For example, in the display state of the display section 140 shown in Fig. 20, if the user operates the cross key 211 of the operation input section 135 and then operates the OK button 212 so as to select and decide "4 POSITION GROUP 4", in Step S106, the hierarchy managing section 182 determines whether or not there are only leaves (images) in the selected group.

The position group 4 in the Fig. 20 is a group in which only leaves (images) are included, so the process progresses to Step S113.

In Step S113, the image reading section 183 reads, from the image DB 151, the representative image of the images included in the group selected by the hierarchy managing section 182 and other images in cluster data read by the hierarchy managing section 182.

In Step S114, the combining section 184 combines a reduced scale map based on positional information of the images and the icons and representative image representing the images at the position corresponding to positional information of each image on the map, and displays the combined image on the display section 140.

Specifically, the combining section 184 acquires positional information of images including the representative image of the group read by the image reading section 183. The combining section 184 acquires a map from the map managing section 181, and generates a reduced scale map in which all the positions corresponding to positional information of the images are included with a certain margin. The combining section 184 combines the generated reduced scale map and the icons and representative image representing the images at the position corresponding to positional information of each image, and displays the combined image on the display section 140, as shown in Fig. 21.

In Fig. 21, a predetermined reduced scale map is displayed at the right portion, and the icons and representative image representing the images included in the position group 4 of Fig. 20 are displayed on the map.

In Fig. 21, a menu screen is displayed at the left portion. On the menu screen of Fig. 21, the items "PLAY ALL IMAGES ON MAP", "10 0 RETURN TO PREVIOUS WIDE-RANGE MAP", and "TOP" are displayed.

Returning to the flowchart of Fig. 15, in Step S115, the display control section 139 determines whether or not the item "PLAY ALL IMAGES ON MAP" on the menu screen of the display section 140 is selected by an operation of the user. That is, the display control section 139 determines whether or not an operation command purporting that the item "PLAY ALL IMAGES ON MAP" is selected is supplied from the operation input section 135 through the light receiving section 136. Alternatively, the display control section 139 may determine whether or not an operation command indicating that the user operates the play button is supplied from the operation input section 135 through the light receiving section 136.

In Step S115, when it is determined that the operation command purporting that the item "PLAY ALL IMAGES ON MAP" is selected is supplied, the process progresses to Step S116.

In Step S116, the image reading section 183 supplies the representative image of the images included in the group being currently displayed and other images to the display section 140, and the display section 140 displays the images in a slide show starting with an image having the latest image ID.

In Step S115, when it is determined that the operation command purporting that the item "PLAY ALL IMAGES ON MAP" is selected is not supplied, the process skips Step S116 and progresses to Step S117.

Fig. 22 is a diagram showing a display example of the display section 140 after the item "PLAY ALL IMAGES ON MAP" is selected on the display section 140 of Fig. 21.

In Fig. 22, the images included in the group being displayed in Fig. 21 are displayed at the substantially central portion. A reduced scale map according to a group in which the image is included is displayed at the upper left portion of Fig. 22. The position of an icon on the map changes to correspond to the image being displayed.

In this case, when the user operates the menu button 213 of the operation input section 135, a menu screen (right side) shown in Fig. 23 is displayed.

On the menu screen of Fig. 23, the items "CLOSE", "DISPLAY CHAPTER", "CHANGE MUSIC", "DISPLAY MAP", "STOP AND RETURN TO MAP", and "TOP MENU" are displayed.

As described above, when the images are sequentially displayed and display of all the images included in the relevant group ends, or when the item "STOP AND RETURN TO MAP" on the menu screen of the display section 140 is selected by an operation of the user, display of the display section 140 returns to display shown in Fig. 21.

Returning to the flowchart of Fig. 15, in Step S117, the display control section 139 determines whether or not the item "RETURN TO PREVIOUS WIDE-RANGE MAP" (Fig. 21) on the menu screen of the display section 140 is selected by an operation of the user. That is, the display control section 139 determines whether or not an operation command purporting that the item "RETURN TO PREVIOUS WIDE-RANGE MAP" on is selected is supplied from the operation input section 135 through the light receiving section 136.

In Step S117, when it is determined that the item "RETURN TO PREVIOUS WIDE-RANGE MAP" is selected, the process progresses to Step S112.

In Step S117, when it is determined that the item "RETURN TO PREVIOUS WIDE-RANGE MAP" is selected, the process progresses to Step S115.

In Step S115, when it is determined that the operation command purporting that the item "PLAY ALL IMAGES ON MAP" is selected is not supplied, the process skips Steps S116 and S117 and progresses to Step S117.

According to the above-described process, together with the reduced scale map according to the hierarchy of the group, the images grouped hierarchically according to positional information are displayed at the positions corresponding to positional information on the map for each group. While all the images included in the group are not displayed on the map, the representative image of the group and icons representing other images corresponding to the scale of the map are displayed. Therefore, the user can intuitively grasp the relationship between the photographing positions of the images and the positions on the map.

An instruction from the user to the image display device 101 is realized by transmission of an operation command from the operation input section 135 as a remote controller. That is, the user can display the reduced scale map according to the hierarchy of the group and the images included in the relevant group by simpler operation of the cross key or OK button, as compared with a pointer operation by a mouse or a touch pad which is unlikely to be handled under the unstable environment.

In the above description, the configuration in which the single image display device 101 performs the grouping process and the display control process has been described, but the above-described process may be executed by a system having a device for the grouping process and a device for the display control process.

[Functional Configuration Example of Image Display System]

Fig. 24 shows a functional configuration example of an image display system having a recording device for a grouping process and a playback device for a display control process.

The image display system of Fig. 24 includes a recording device 501, an optical disk 502, and a playback device 503.

The recording device 501 performs the grouping process on images stored in advance, and records grouped hierarchically images and data regarding the images in the optical disk 502. The playback device 503 reads the hierarchically grouped images and data regarding the images recorded in the optical disk 502, and displays, together with the reduced scale map according to the hierarchy of the group, the images at the positions corresponding to positional information on the map.

The recording device 501 includes a storage section 531, a positional information acquiring section 532, an arithmetic section 533, an operation input section 534, a condition setting section 535, and a disk drive 536. The arithmetic section 533 includes a clustering section 541 and a hierarchy deciding section 542. The clustering section 541 includes a distance calculating section 541a and a cluster creating section 541b, and the hierarchy deciding section 542 includes a density calculating section 542a and a deciding section 542b.

The positional information acquiring section 532, the arithmetic section 533, and the condition setting section 535 of the recording device 501 respectively have the same functions as the positional information acquiring section 133, the arithmetic section 134, and the condition setting section 137 of Fig. 1, so descriptions thereof will not be repeated.

The storage section 531 has, for example, a storage medium, such as a semiconductor memory, for example, a RAM (Random Access Memory) or a flash memory, or a hard disk, and stores data supplied from an external apparatus (not shown). For example, the storage section 531 stores images supplied from a digital camera (not shown) or the like. The images stored in the storage section 531 are acquired by the positional information acquiring section 532 or the arithmetic section 533. The storage section 531 also stores binary tree structure data or cluster data generated by the arithmetic section 533.

The operation input section 534 has various operating buttons, keys, a touch panel, and the like, and, when being operated by the user, supplies a control signal (operation command) representing the operation contents to the condition setting section 535.

The disk drive 536 is configured such that the optical disk 502 is removably loaded therein, and records data stored in the storage section 531 to the loaded optical disk 502.

The optical disk 502 is a removable medium (storage medium), such as a BD (Blu-ray Disc) or the like, which is removable from the recording device 501 and the playback device 503, and records image data 551, binary tree structure data 552, cluster data 553, and a control program 554. Image data 551, binary tree structure data 552, and cluster data 553 are respectively identical to data recorded in the image DB 151, the binary tree DB 152, and the cluster DB 153 of Fig. 1, so descriptions thereof will not be repeated. The control program 554 is a group of application programs, called BD-J (Bluray Disc Java (Registered Trademark)) described in the program language Java (Registered Trademark), and is executed by the playback device 503.

The playback device 503 includes a disk drive 571, a storage section 572, a network communication section 573, an operation input section 574, a light receiving section 575, a display control section 576, and a display section 577. The display control section 576 includes a map managing section 581, a hierarchy managing section 582, an image reading section 583, and a combining section 584.

In Fig. 24, the operation input section 574 and the display section 577 are shown outside the playback device 503, but they are regarded as being included in the playback device 503.

The network communication section 573, the operation input section 574, the light receiving section 575, the display control section 576, and the display section 577 of the playback device 503 respectively have the same functions as the network communication section 138, the operation input section 135, the light receiving section 136, the display control section 139, and the display section 140 of Fig. 1, so descriptions thereof will not be repeated.

The disk drive 571 is configured such that the optical disk 502 is removably loaded therein. The disk drive 571 reads data from the loaded optical disk 502 and supplies data to the storage section 572.

The storage section 572 is a storage medium, for example, a semiconductor memory, such as a RAM (Random Access Memory) or a flash memory, or a hard disk, and stores data (including programs) supplied from the disk drive 571. The storage section 572 also supplies data (including programs) stored therein to the display control section 576 as occasion demands.

With the above-described configuration, the grouping process is executed by the recording device 501, and the display control process is executed by the playback device 503.

The grouping process and the clustering process by the recording device 501 are the same as the process by the image display device 101 of Fig. 1 which has been described with reference to the flowcharts of Figs. 4 and 5, except that binary tree structure data or cluster data is recorded in the optical disk 502 through the storage section 531 and the disk drive 536, so descriptions thereof will not be repeated.

The display control process by the playback device 503 is the same as the process by the image display device 101 of Fig. 1 which has been described with reference to the flowchart of Fig. 15, except that images or cluster data is read from the optical disk 502 through the storage section 572 and the disk drive 571, so a description thereof will not be repeated.

That is, in the image display system of Fig. 24, the clusters in binary tree structure data can be grouped into a new image group in accordance with the user's preference.

Together with the reduced scale map according to the hierarchy of the group, the images grouped hierarchically according to positional information are displayed at the positions corresponding to positional information on the map for each group. While all the images included in the group are not displayed on the map, the representative image of the group and icons representing other images corresponding to the scale of the map are displayed. Therefore, the user can intuitively grasp the relationship between the photographing positions of the images and the positions on the map.

The user can display the reduced scale map according to the hierarchy of the group and the images included in the relevant group by simpler operation of the cross key or OK button, as compared with a pointer operation by a mouse or a touch pad which is unlikely to be handled under the unstable environment.

Although in the above-described example, image grouping has been performed by using the cluster density according to positional information, image grouping may be performed on the basis of date and time information, for example.

Although in the above-described example, the images are still images, the invention is not limited thereto. For example, motion images may be used.

In the above-described example (Figs. 16 to 21), a menu screen is displayed on the display section 140, together with a predetermined reduced scale map, and the user can select and decide a group. Alternatively, even though a menu screen is not displayed, a group may be selected, and a reduced scale map according to the hierarchy of the group and the images included in the group may be displayed. For example, the user may operate the cross key 211 in the left and right directions to select a group in a predetermined hierarchy, and may then operate the cross key 211 of the operation input section 135 in the up and down direction to move to a hierarchy next above (or below) the selected group.

Although in the above-described example, an image group is newly obtained on the basis of the cluster density of a cluster clustered according to positional information of images, the invention is not limited thereto. For example, another clustering method may be used insofar as a group with a hierarchical structure is obtained.

In the above-described example, the scale of a map displayed on the display section is set such that all the positions corresponding to positional information of the respective groups included in the selected group are included with a certain margin. Alternatively, if a group in a high-level hierarchy includes only one image, when the relevant group is selected, hierarchies may be provided, and the scale may be reduced hierarchically, without zooming out to the minimum scale. In this case, even though the hierarchy moves down, only one cluster (image) is displayed on the map.

A series of processes described above may be executed by hardware or software. When a series of processes are executed by software, a program which constructs software is installed from a program recording medium on a computer, which is incorporated into exclusive-use hardware, or a general-use personal computer, on which various programs are installed to execute various functions.

Fig. 25 is a block diagram showing a hardware configuration example of a computer which executes a series of processes described above by a program.

A computer is configured such that a CPU (Central Processing Unit) 901, a ROM (Read Only Memory) 902, and a RAM (Random Access Memory) 903 are connected to each other through a bus 904.

An input/output interface 905 is also connected to the bus 904. An input section 906 having a keyboard, a mouse, a microphone, and the like, an output section 907 having a display, a speaker, and the like, a storage section 908 having a hard disk, a nonvolatile memory, and the like, a communication section 909 having a network interface or the like, and a drive 910 which drives a removable medium 911, such as a magnetic disk, an optical disk, a magneto-optical disk, or a semiconductor memory, are connected to the input/output interface 905.

In the computer configured as above, the CPU 901 loads a program stored in the storage section 908 on the RAM 903 through the input/output interface 905 and the bus 904, and executes the program, so a series of processes described above is performed.

A program which is executed by the computer (CPU 901) may be recorded and provided on the removable medium 911 which is a package medium, such as a magnetic disk (including a flexible disk), an optical disk (CD-ROM (Compact Disc-Read Only Memory), a DVD (Digital Versatile Disc), or the like), a magneto-optical disk, or a semiconductor memory, or may be provided through a wired or wireless transmission medium, such as a local area network, Internet, or digital satellite broadcasting.

The program may be installed on the storage section 908 through the input/output interface 905 by loading the removable medium 911 in the drive 910. The program may be received by the communication section 909 through a wired or wireless transmission medium and installed on the storage section 908. In addition, the program may be installed in advance on the ROM 902 or the storage section 908.

The program which is executed by the computer may be a program which is processed in a time series manner in the order as described in this specification, or a program which is processed in parallel or at necessary timing, for example, when a call is performed.

It should be noted that the invention is not limited to the above-described embodiment, and various modifications may be made without departing from the subject matter of the invention.

In this specification, the term "system" refers to an entire device having a plurality of devices.

The present application contains subject matter related to that disclosed in Japanese Priority Patent Application JP 2008-317914 filed in the Japan Patent Office on December 15, 2008.

It should be understood by those skilled in the art that various modifications, combinations, sub-combinations and alterations may occur depending on design requirements and other factors insofar as they are within the scope of the appended claims or the equivalents thereof.

## Claims

1. An information processing device which displays on a map a plurality of images classified by hierarchical clustering and associated with positional information, the information processing device comprising:

   deciding means (162b) for deciding clusters satisfying a predetermined condition from among clusters created by the hierarchical clustering as the same group; and
   display control means (139) for performing control such that the clusters belonging to the group are displayed on a reduced scale map based on positional information of the respective clusters belonging to the group.

2. The information processing device according to claim 1,
   wherein the display control means (139) performs control such that a representative image selected from at least one image included in each cluster is displayed at a position based on the positional information of each cluster belonging to the group on the reduced scale map based on the positional information of the respective clusters belonging to the group.

3. The information processing device according to claim 1,
   wherein the positional information of each cluster is information based on positional information of the image included in each cluster.

4. The information processing device according to claim 1,
   wherein the predetermined condition is a condition regarding the range of density of child clusters included in each cluster, and
   the deciding means (162b) calculates the density of child clusters included in each cluster, and decides clusters, in which the calculated density falls within a predetermined range, as the same group.

5. The information processing device according to claim 1, further comprising:

   clustering means (161) for clustering the images associated with the positional information to a binary tree structure in accordance with distances based on the positional information.

6. The information processing device according to claim 1, further comprising:

   input means (135) for inputting an instruction to select one of the clusters being displayed,

   wherein the display control means (139) performs control such that, on a reduced scale map based on positional information of respective clusters belonging to a lower layer group in a hierarchy lower than that of the group to which the cluster selected in accordance with the instruction by the input means belongs, the clusters belonging to the lower layer group are displayed.

7. The information processing device according to claim 6,
   wherein the input means (135) instructs to display clusters belonging to an upper layer group in a hierarchy higher than that of the group to which the clusters being displayed belong, and
   the display control means (139) performs control on the basis of the instruction by the input means (135) such that the clusters belonging to the upper layer group are displayed on a reduced scale map based on positional information of the respective clusters belonging to the upper layer group.

8. The information processing device according to claim 6,
   wherein the input means (135) is a remote controller.

9. An information processing method for an information processing device which displays on a map a plurality of images classified by hierarchical clustering and associated with positional information, the method comprising the steps of:

   deciding clusters satisfying a predetermined condition from among clusters created by the hierarchical clustering as the same group; and
   performing control such that the clusters belonging to the group are displayed on a reduced scale map based on positional information of the respective clusters belonging to the group.

10. A program which causes a computer to execute a process of an information processing device, which displays on a map a plurality of images classified by hierarchical clustering and associated with positional information, the process comprising the steps of:

   deciding clusters satisfying a predetermined condition from among clusters created by the hierarchical clustering as the same group; and
   performing control such that the clusters belonging to the group are displayed on a reduced scale map based on positional information of the respective clusters belonging to the group.

FIG. 1

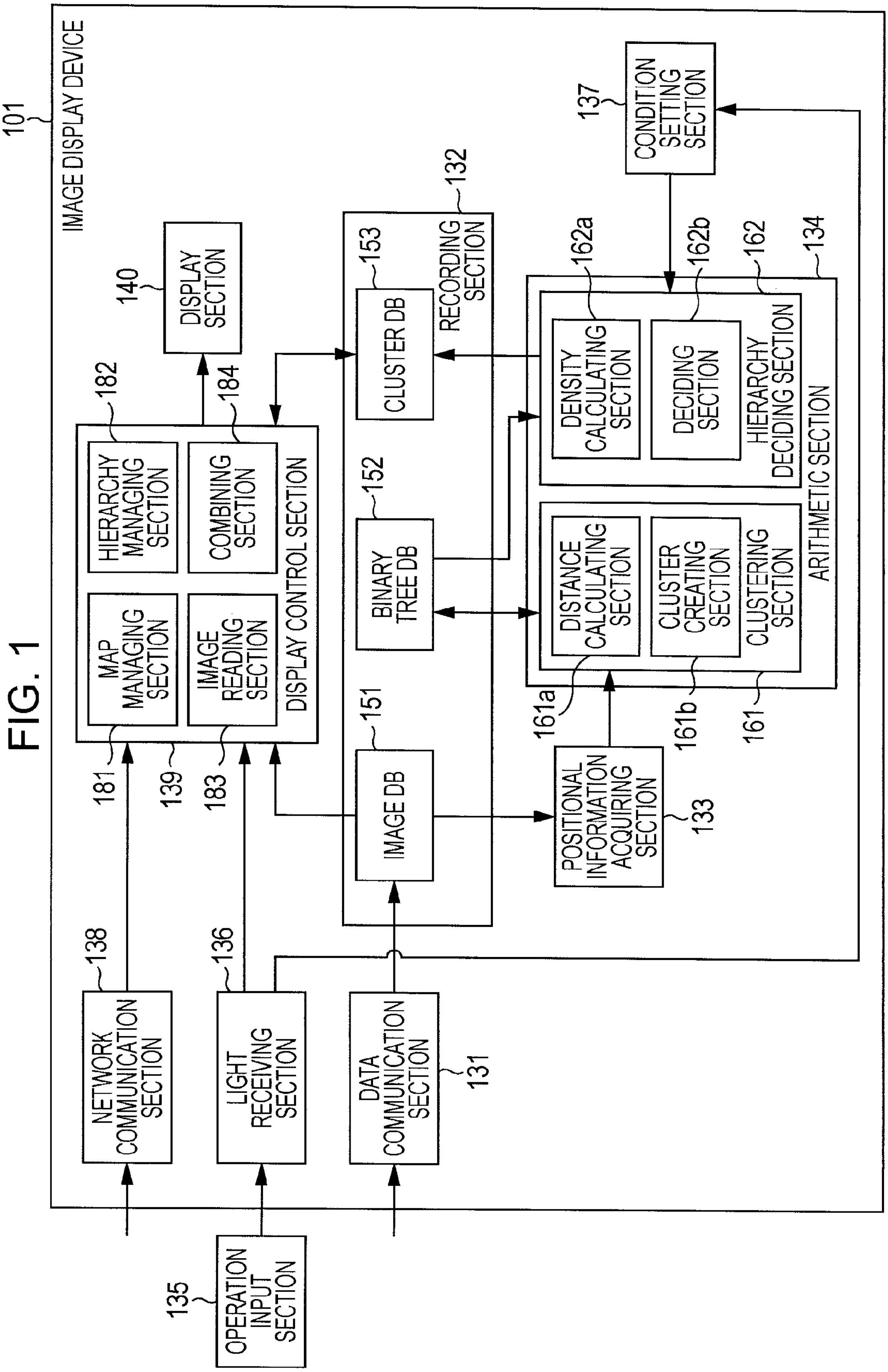
101
IMAGE DISPLAY DEVICE
NETWORK COMMUNICATION SECTION
138
LIGHT RECEIVING SECTION
136
DATA COMMUNICATION SECTION
131
OPERATION INPUT SECTION
135
MAP MANAGING SECTION
181
HIERARCHY MANAGING SECTION
182
IMAGE READING SECTION
183
COMBINING SECTION
184
DISPLAY CONTROL SECTION
139
DISPLAY SECTION
140
IMAGE DB
151
BINARY TREE DB
152
CLUSTER DB
153
RECORDING SECTION
132
POSITIONAL INFORMATION ACQUIRING SECTION
133
DISTANCE CALCULATING SECTION
161a
CLUSTER CREATING SECTION
161b
CLUSTERING SECTION
161
DENSITY CALCULATING SECTION
162a
DECIDING SECTION
162b
HIERARCHY DECIDING SECTION
162
ARITHMETIC SECTION
134
CONDITION SETTING SECTION
137

FIG. 2

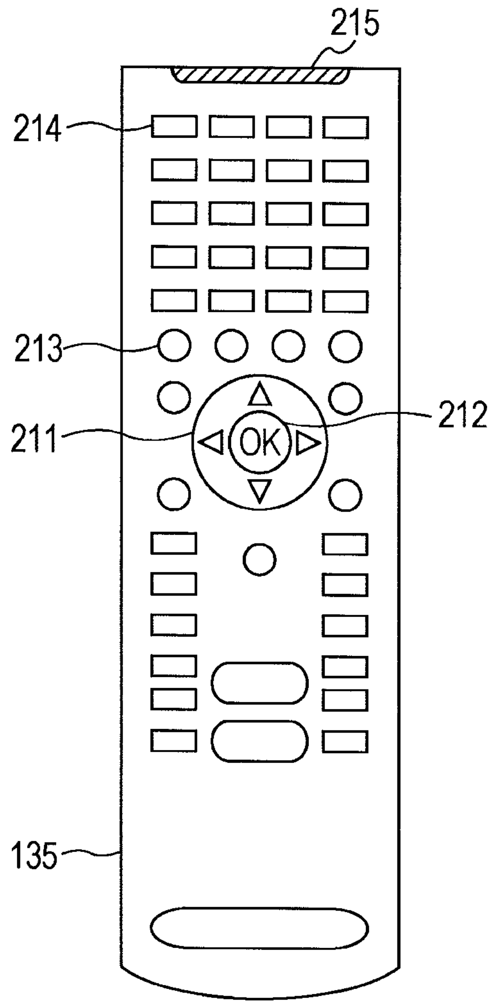

FIG. 3

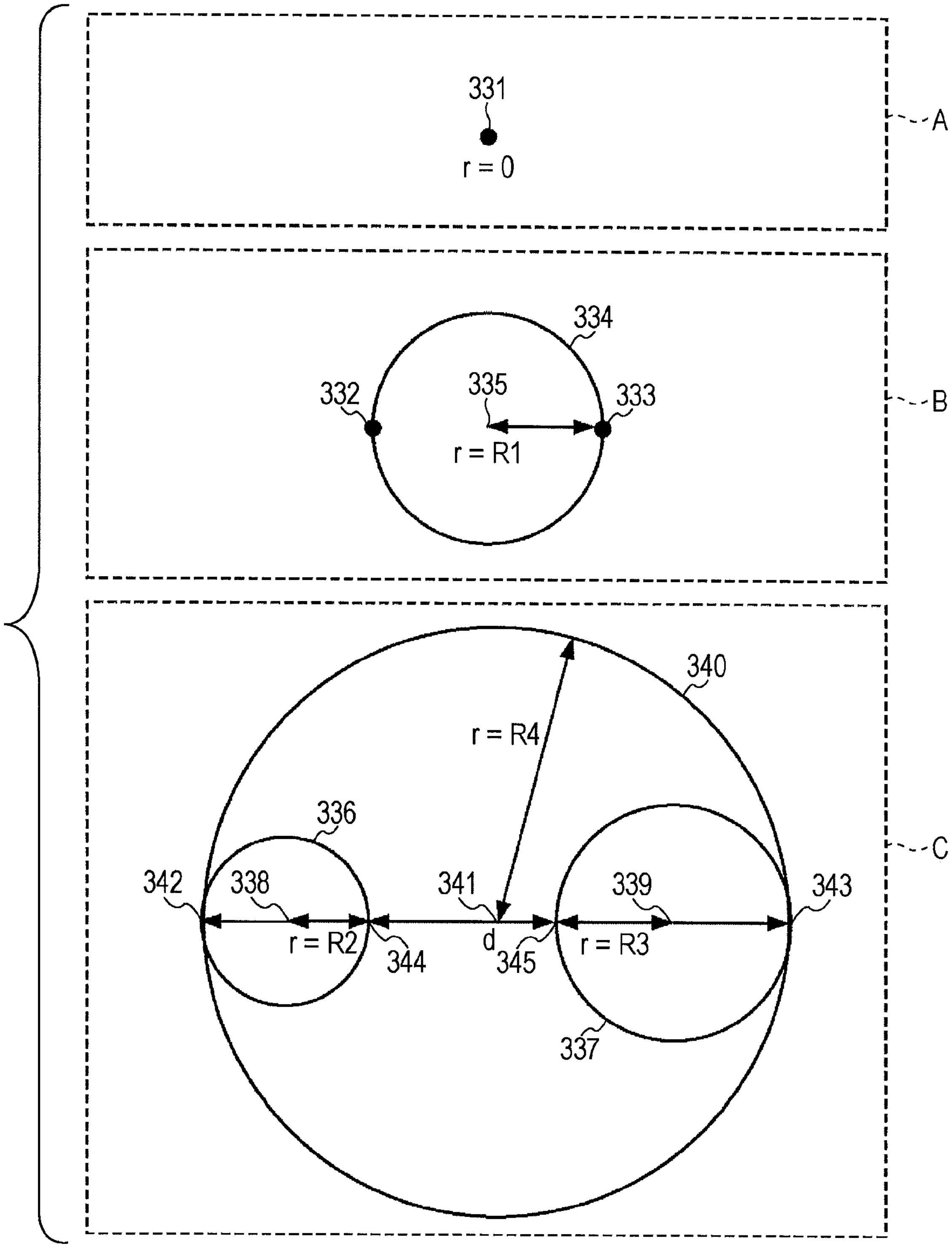
331
r = 0
A
334
332
335
333
r = R1
B
340
r = R4
336
C
342
338
341
339
343
r = R2
344
d
345
r = R3
337

FIG. 4

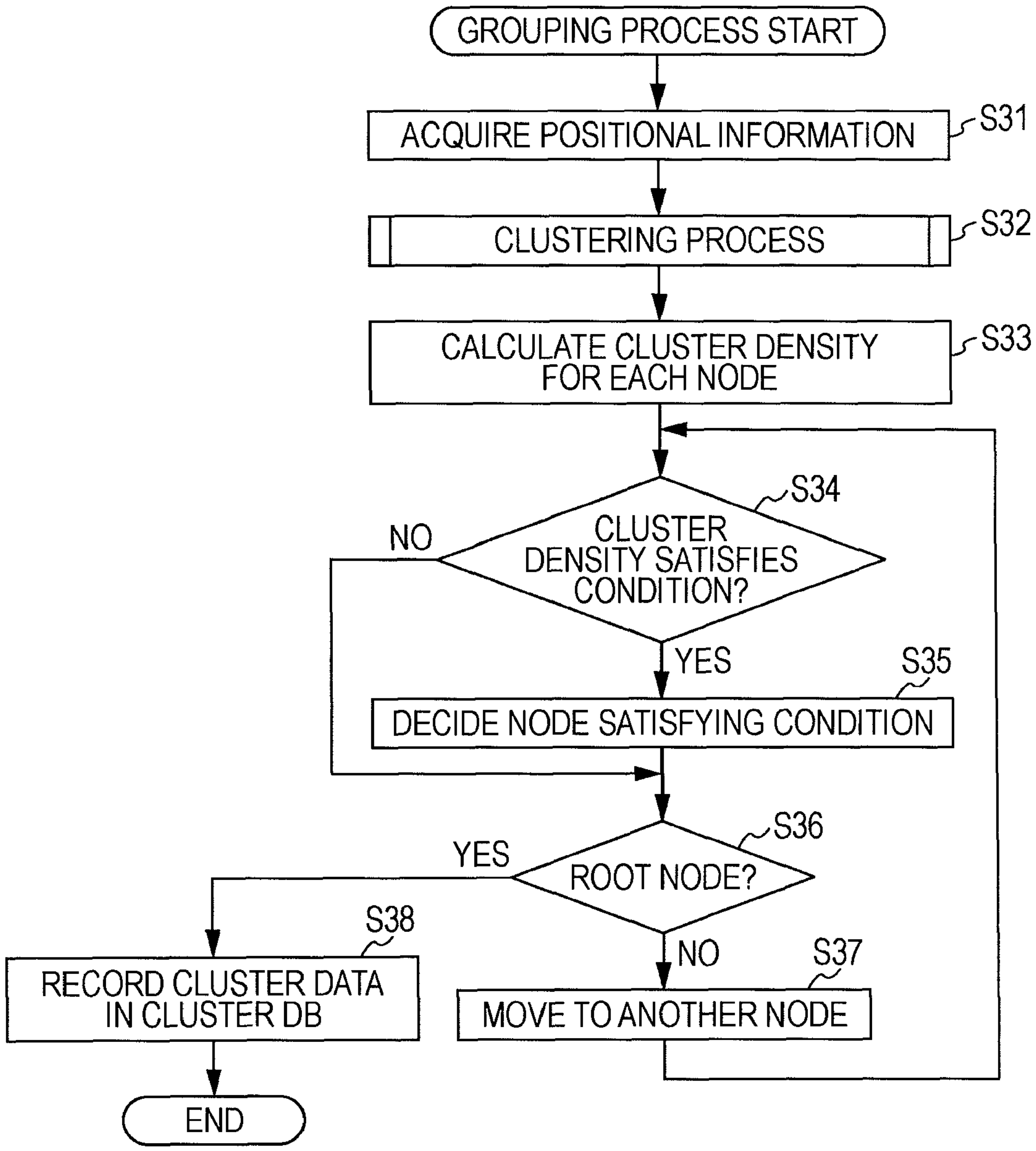
GROUPING PROCESS START
ACQUIRE POSITIONAL INFORMATION
S31
CLUSTERING PROCESS
S32
CALCULATE CLUSTER DENSITY FOR EACH NODE
S33
CLUSTER DENSITY SATISFIES CONDITION?
S34
NO
YES
DECIDE NODE SATISFYING CONDITION
S35
ROOT NODE?
S36
YES
NO
RECORD CLUSTER DATA IN CLUSTER DB
S38
MOVE TO ANOTHER NODE
S37
END

FIG. 5

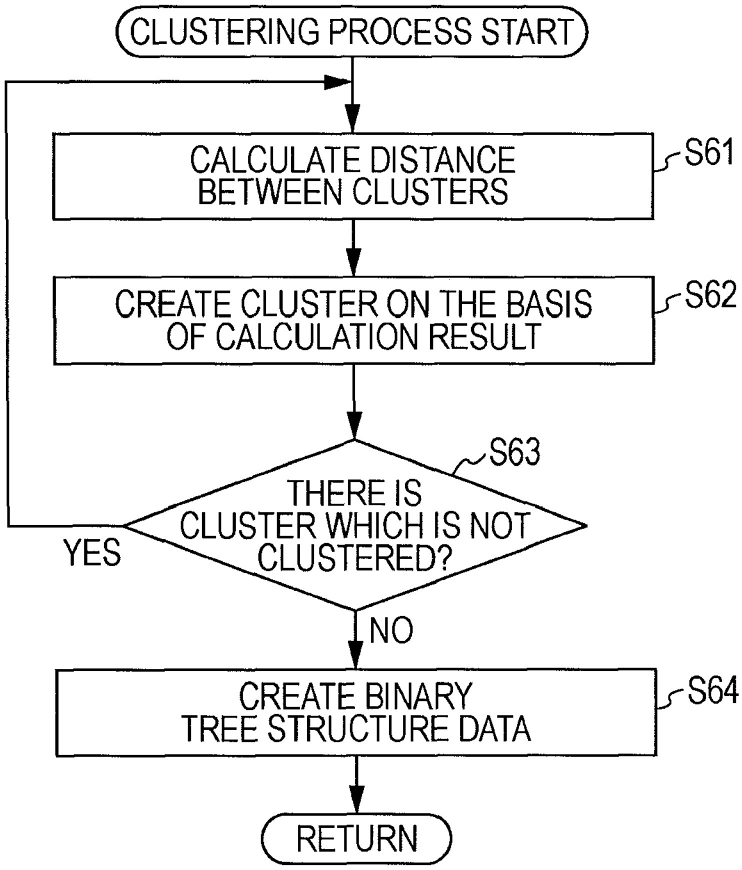
CLUSTERING PROCESS START
CALCULATE DISTANCE BETWEEN CLUSTERS
S61
CREATE CLUSTER ON THE BASIS OF CALCULATION RESULT
S62
THERE IS CLUSTER WHICH IS NOT CLUSTERED?
S63
YES
NO
CREATE BINARY TREE STRUCTURE DATA
S64
RETURN

FIG. 6

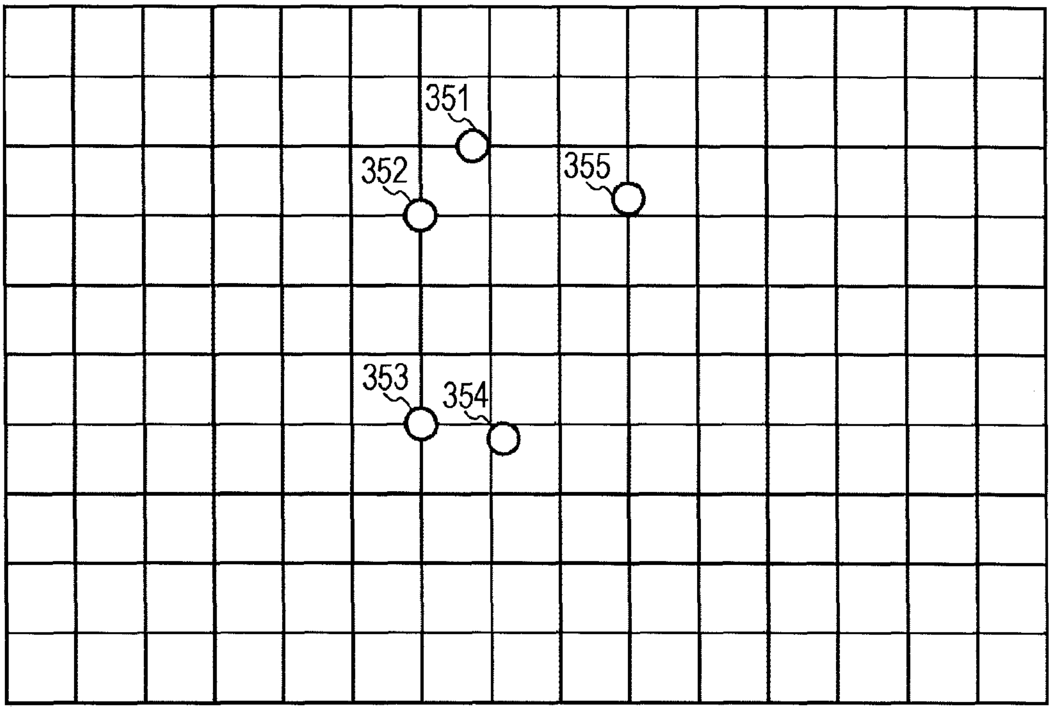


FIG. 7

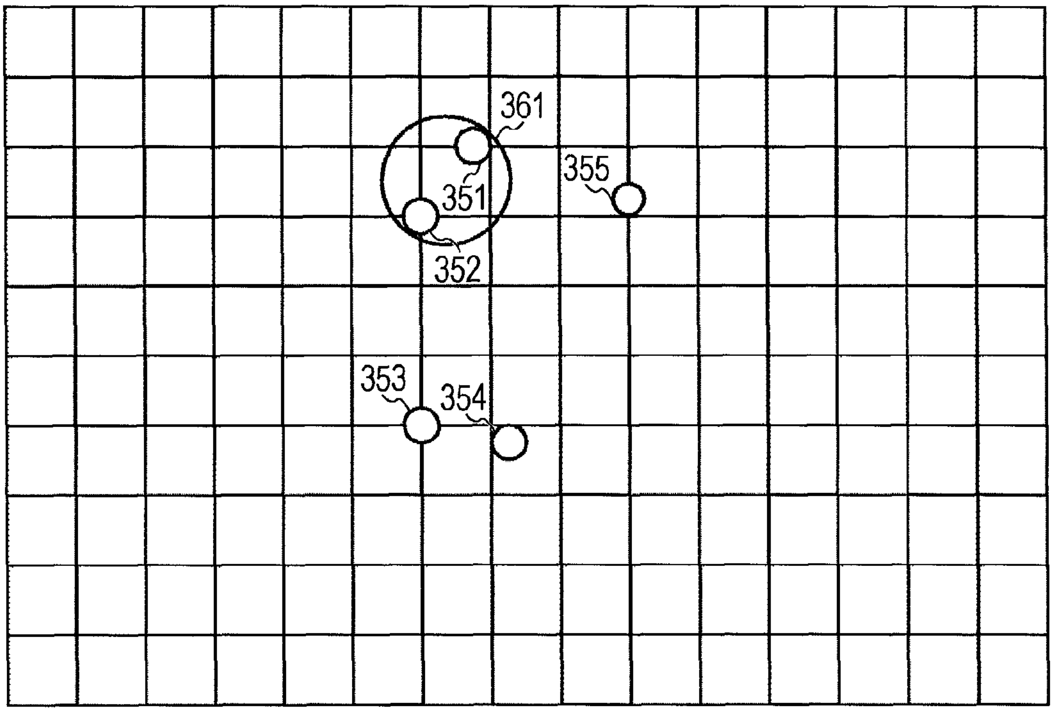

FIG. 8

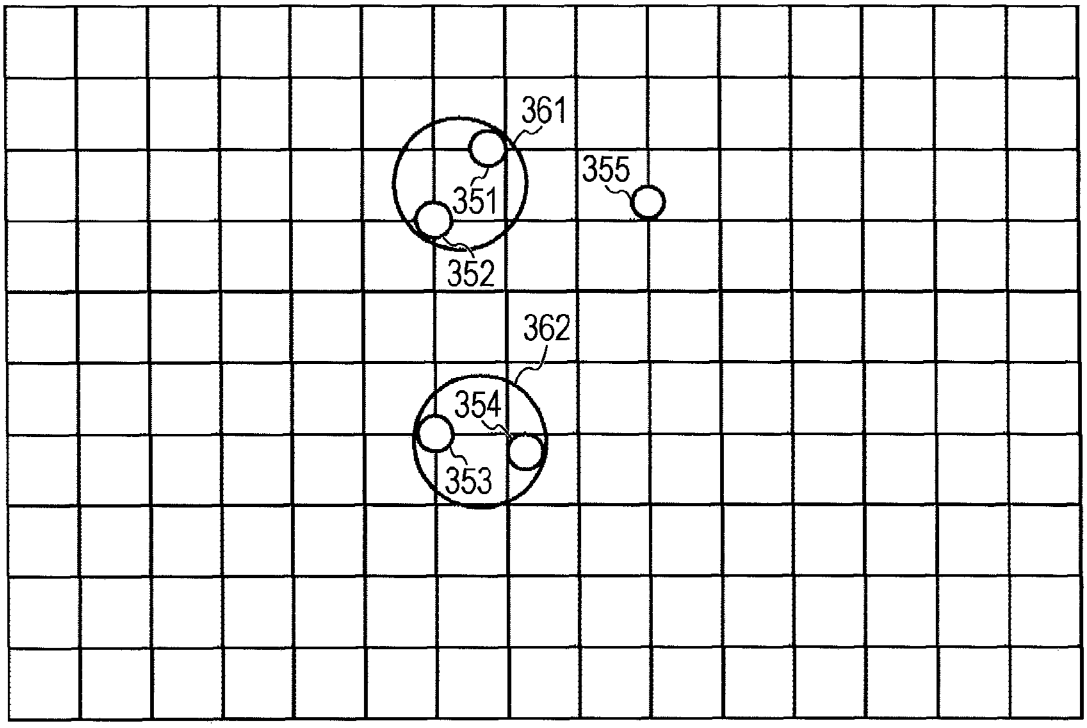


FIG. 9

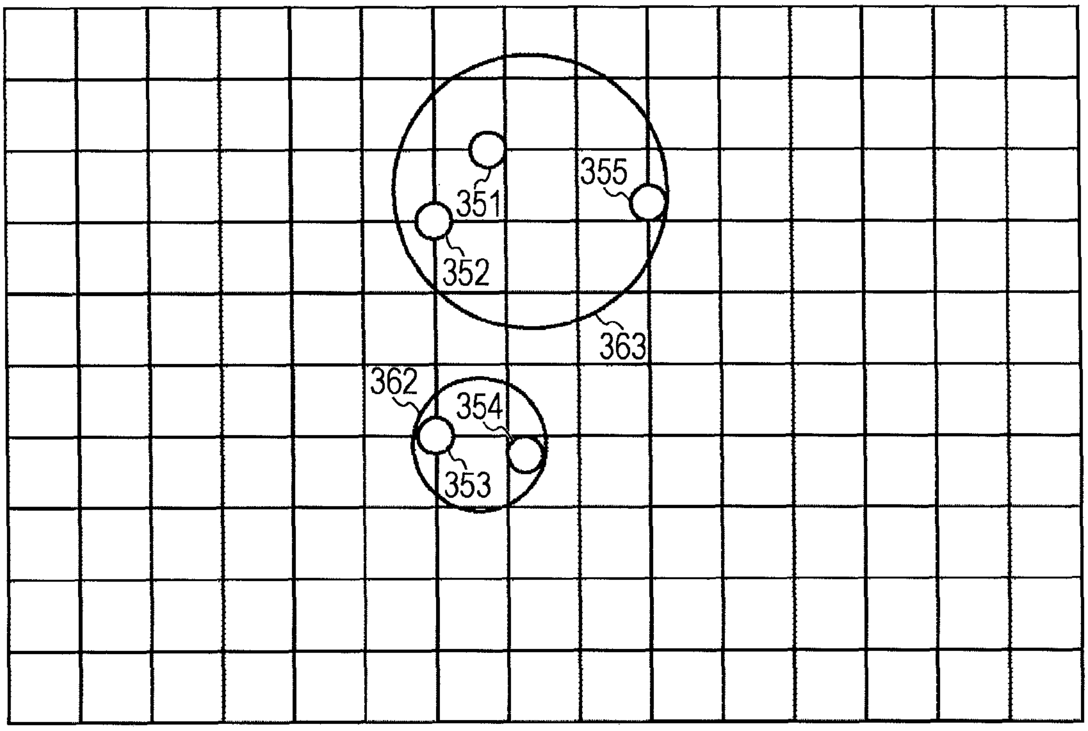

FIG. 10

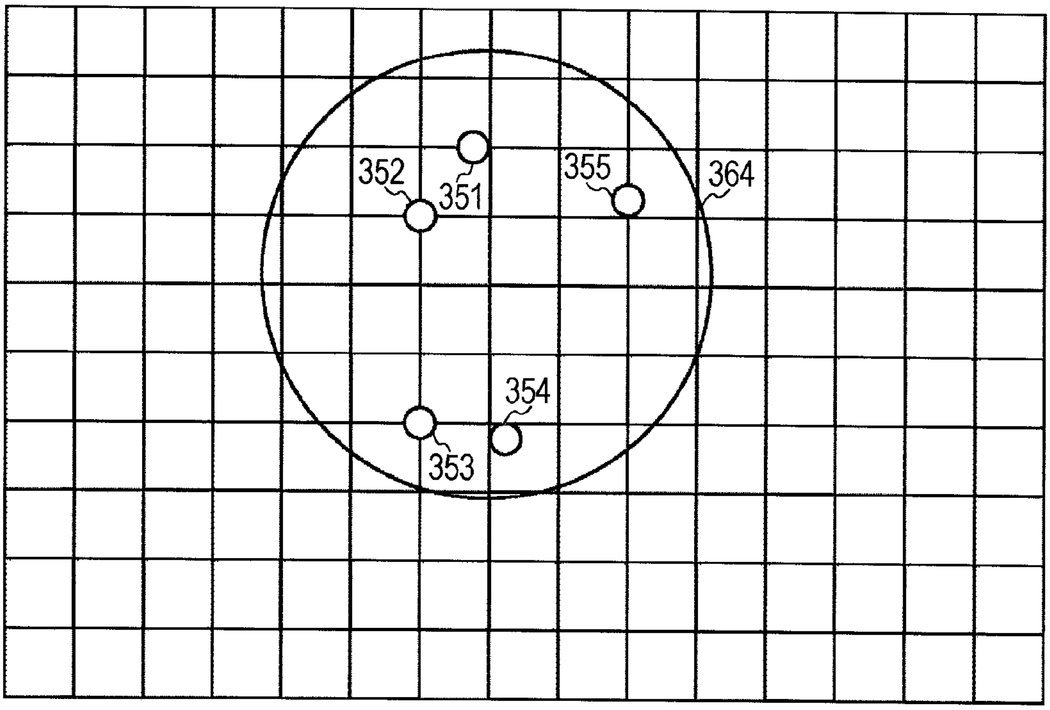


FIG. 11

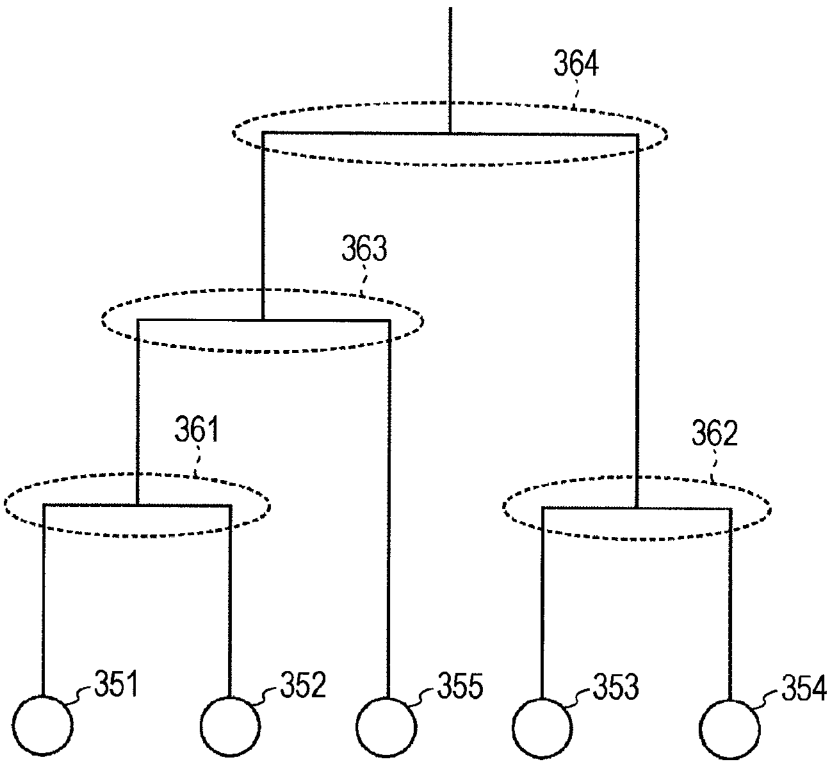

FIG. 12

| DATA NAME | VALUE |
|---|---|
| CLUSTER ID | 0001 |
| CLUSTER CENTER POSITION | (N39.4932998,E141.239801) |
| CLUSTER RADIUS | 56.26 |
| NUMBER OF IMAGES | 12 |
| IMAGE LIST | 1,2,5,6,7,8,9,14,15,16,17,23 |
| CHILD CLUSTER LIST | 0002,0007 |

FIG. 13

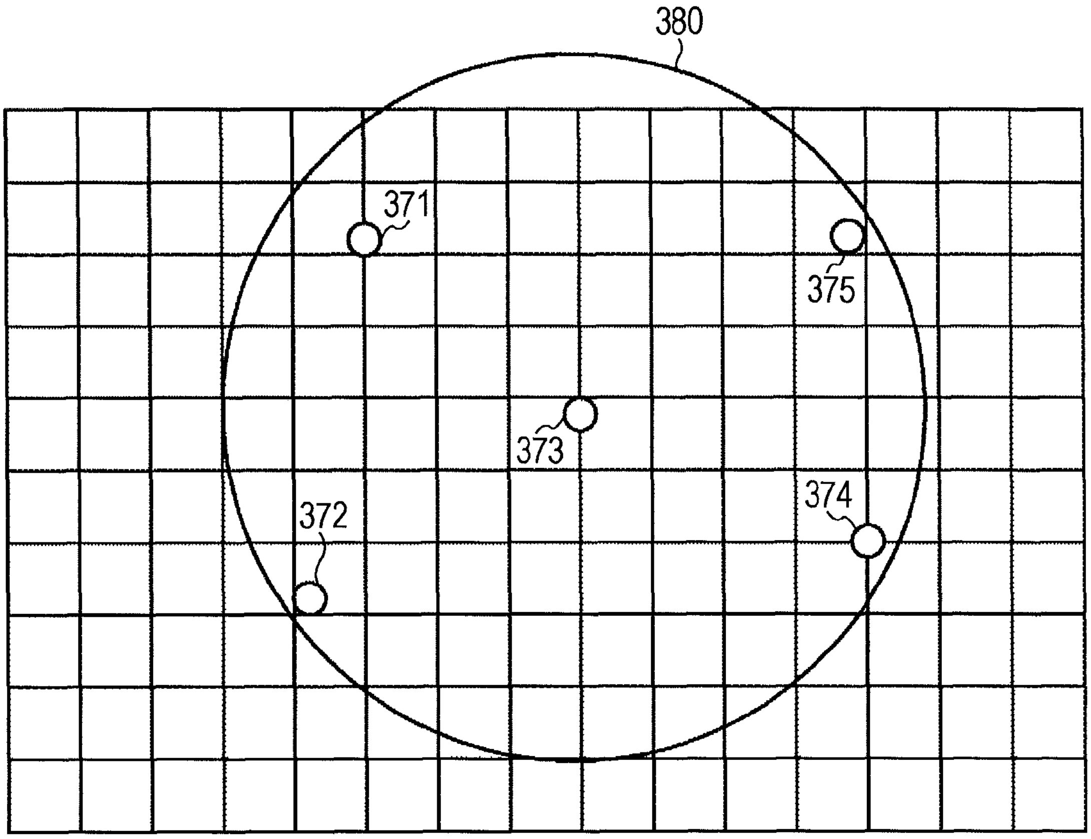

FIG. 14

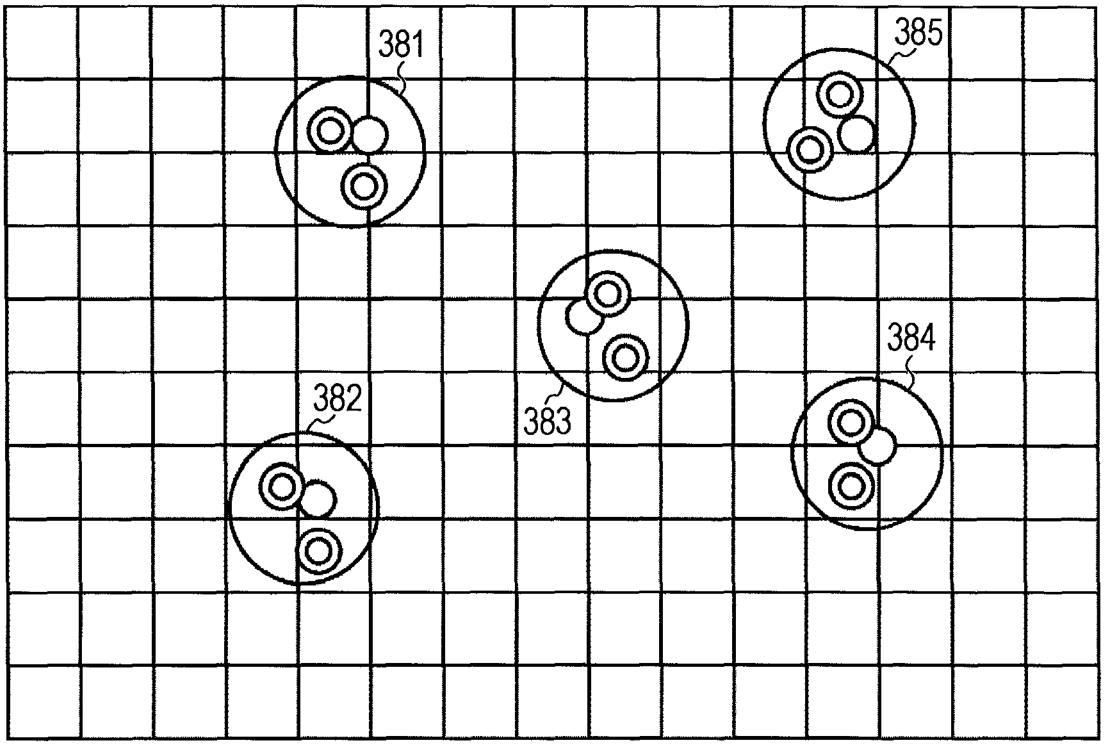

FIG. 15

| FIG. 15A |
| --- |
| FIG. 15B |

FIG. 15A

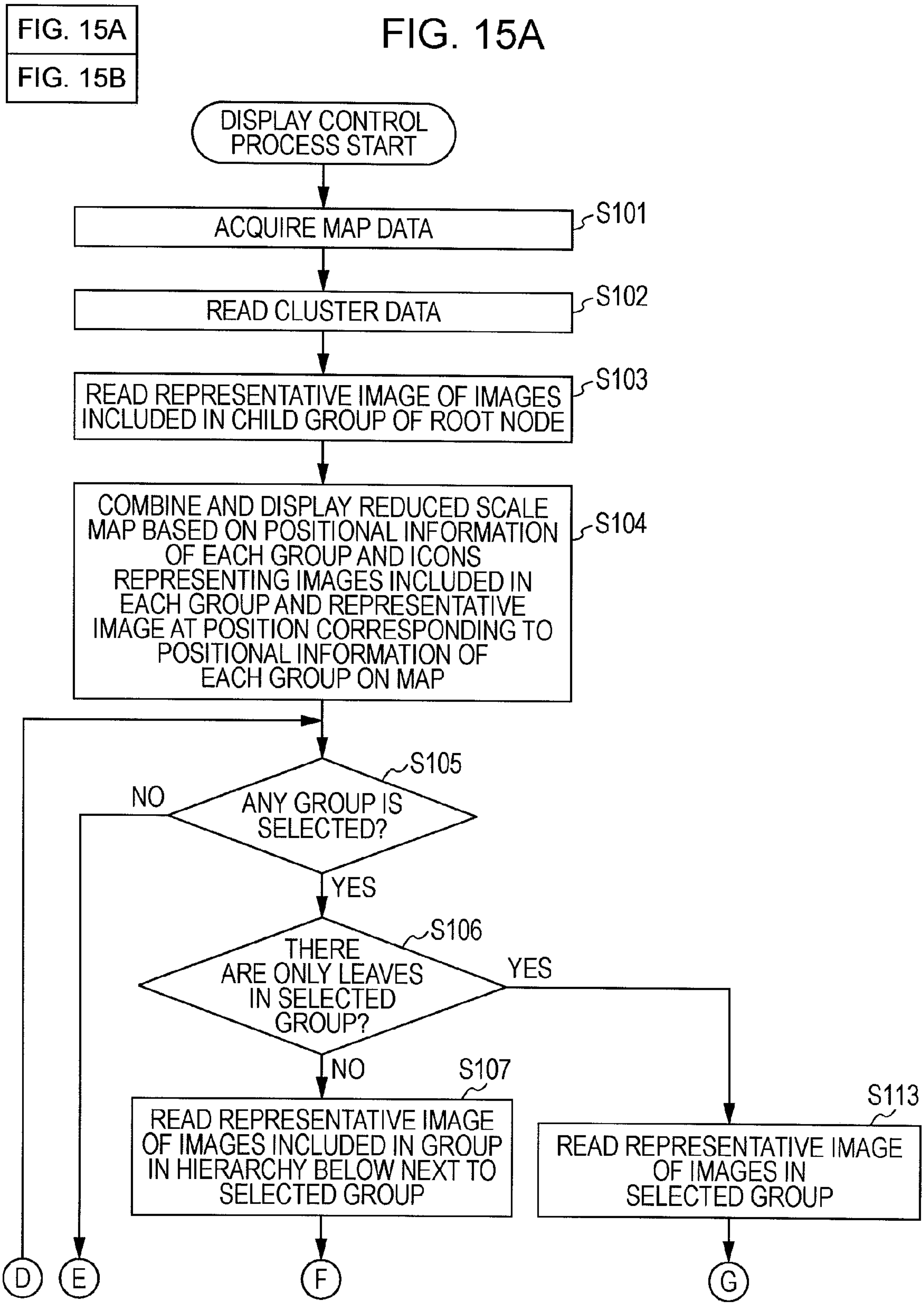

FIG. 15B

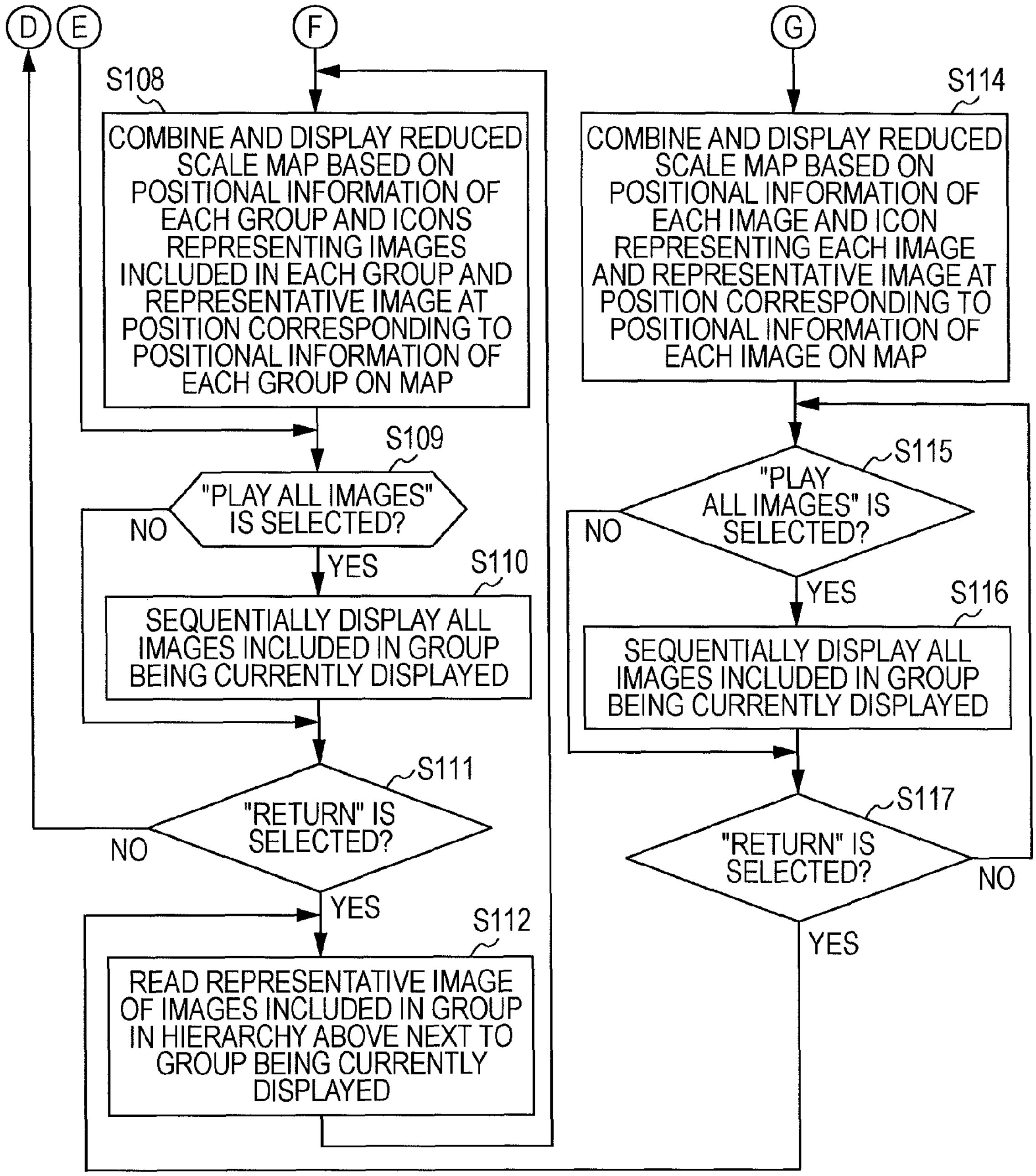
D
E
F
G
S108
COMBINE AND DISPLAY REDUCED SCALE MAP BASED ON POSITIONAL INFORMATION OF EACH GROUP AND ICONS REPRESENTING IMAGES INCLUDED IN EACH GROUP AND REPRESENTATIVE IMAGE AT POSITION CORRESPONDING TO POSITIONAL INFORMATION OF EACH GROUP ON MAP
S109
"PLAY ALL IMAGES" IS SELECTED?
NO
YES
S110
SEQUENTIALLY DISPLAY ALL IMAGES INCLUDED IN GROUP BEING CURRENTLY DISPLAYED
S111
"RETURN" IS SELECTED?
NO
YES
S112
READ REPRESENTATIVE IMAGE OF IMAGES INCLUDED IN GROUP IN HIERARCHY ABOVE NEXT TO GROUP BEING CURRENTLY DISPLAYED
S114
COMBINE AND DISPLAY REDUCED SCALE MAP BASED ON POSITIONAL INFORMATION OF EACH IMAGE AND ICON REPRESENTING EACH IMAGE AND REPRESENTATIVE IMAGE AT POSITION CORRESPONDING TO POSITIONAL INFORMATION OF EACH IMAGE ON MAP
S115
"PLAY ALL IMAGES" IS SELECTED?
NO
YES
S116
SEQUENTIALLY DISPLAY ALL IMAGES INCLUDED IN GROUP BEING CURRENTLY DISPLAYED
S117
"RETURN" IS SELECTED?
NO
YES

FIG. 16

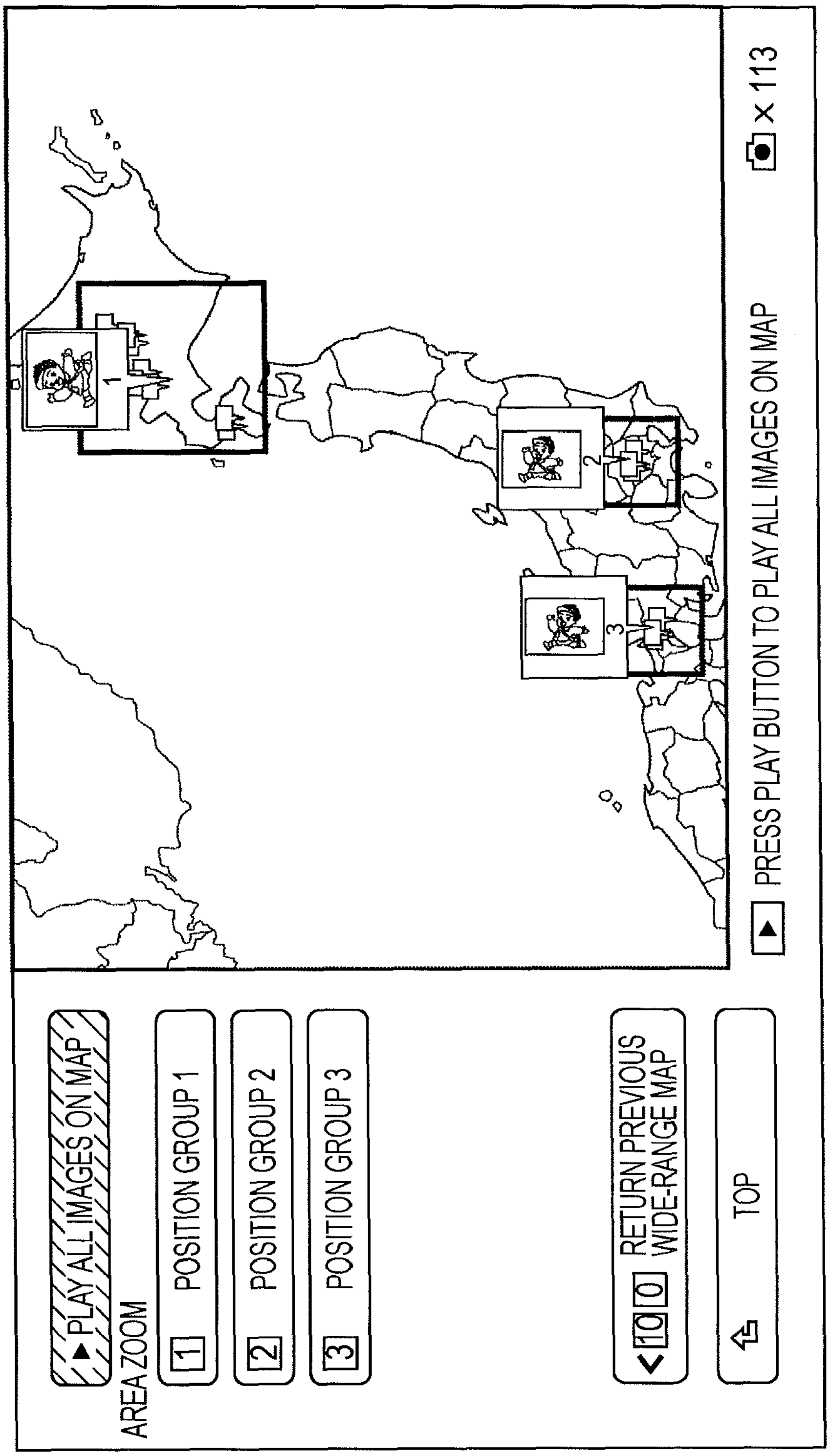

1
2
3
PRESS PLAY BUTTON TO PLAY ALL IMAGES ON MAP
x 113
PLAY ALL IMAGES ON MAP
AREA ZOOM
1 POSITION GROUP 1
2 POSITION GROUP 2
3 POSITION GROUP 3
10 0 RETURN PREVIOUS WIDE-RANGE MAP
TOP

FIG. 17

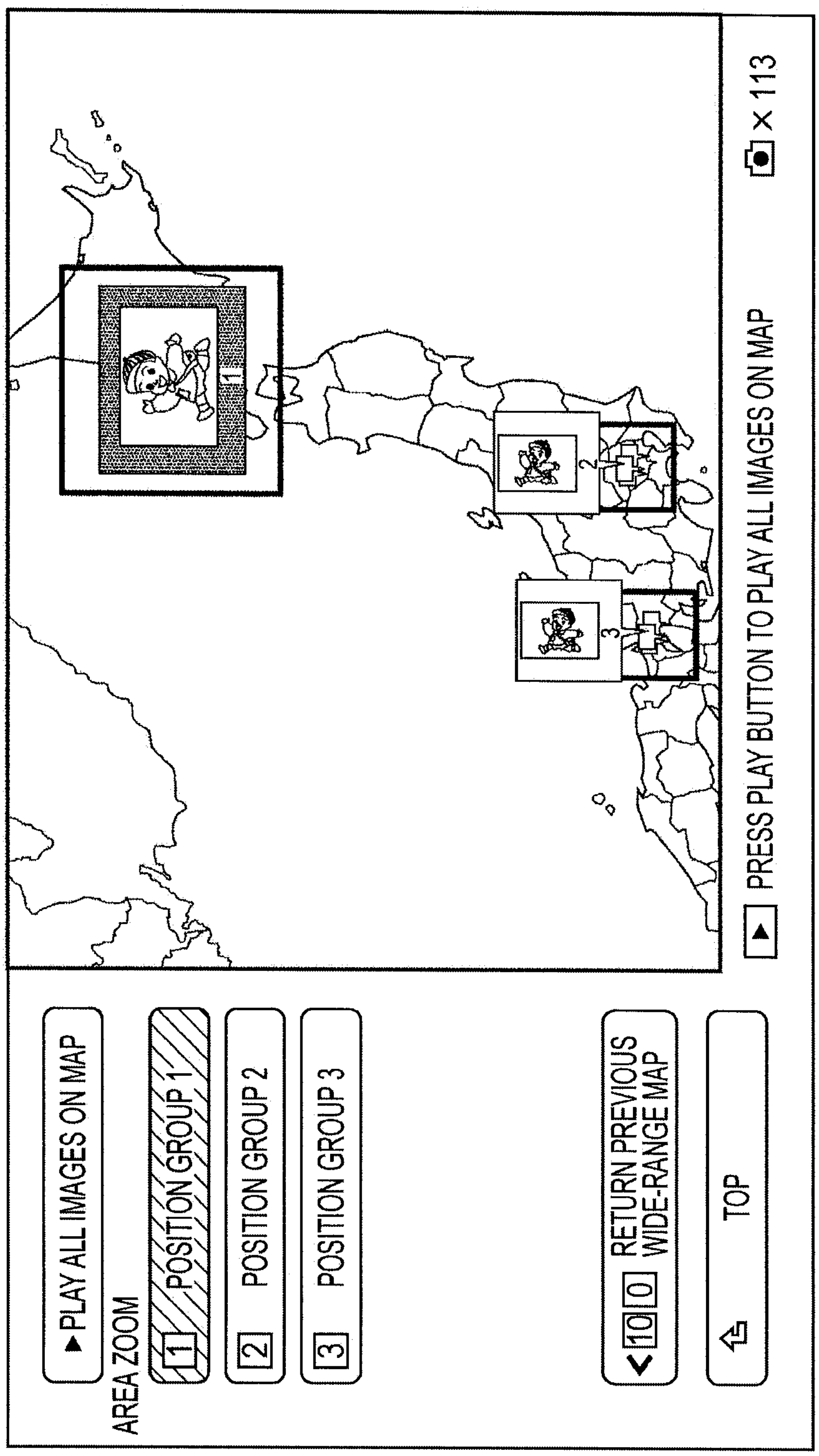
▶PLAY ALL IMAGES ON MAP
AREA ZOOM
1 POSITION GROUP 1
2 POSITION GROUP 2
3 POSITION GROUP 3
10 0 RETURN PREVIOUS WIDE-RANGE MAP
TOP
1
2
3
▶ PRESS PLAY BUTTON TO PLAY ALL IMAGES ON MAP
× 113

FIG. 18

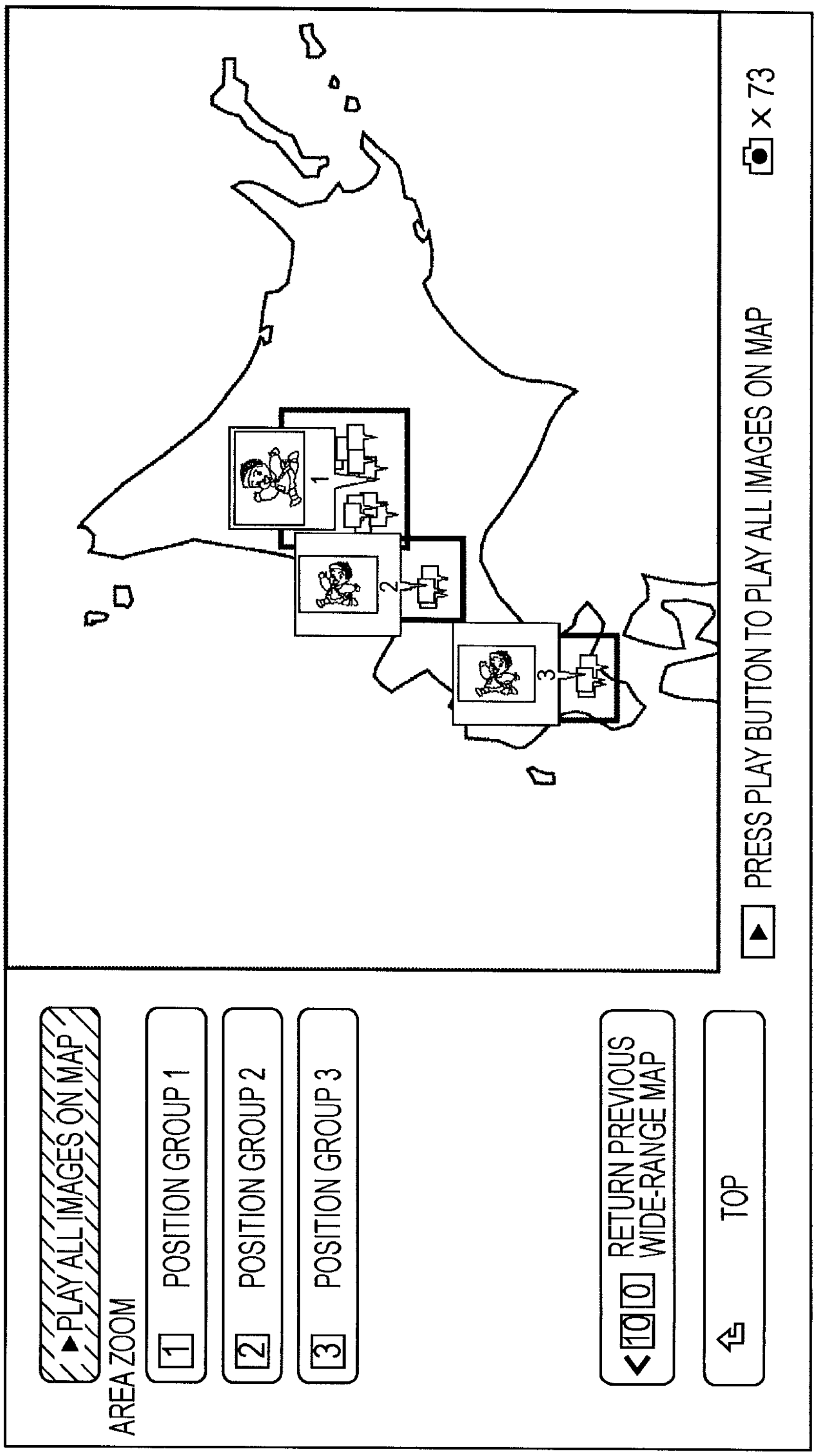
▶PLAY ALL IMAGES ON MAP
AREA ZOOM
1 POSITION GROUP 1
2 POSITION GROUP 2
3 POSITION GROUP 3
RETURN PREVIOUS WIDE-RANGE MAP
TOP
1
2
3
PRESS PLAY BUTTON TO PLAY ALL IMAGES ON MAP
× 73

FIG. 19

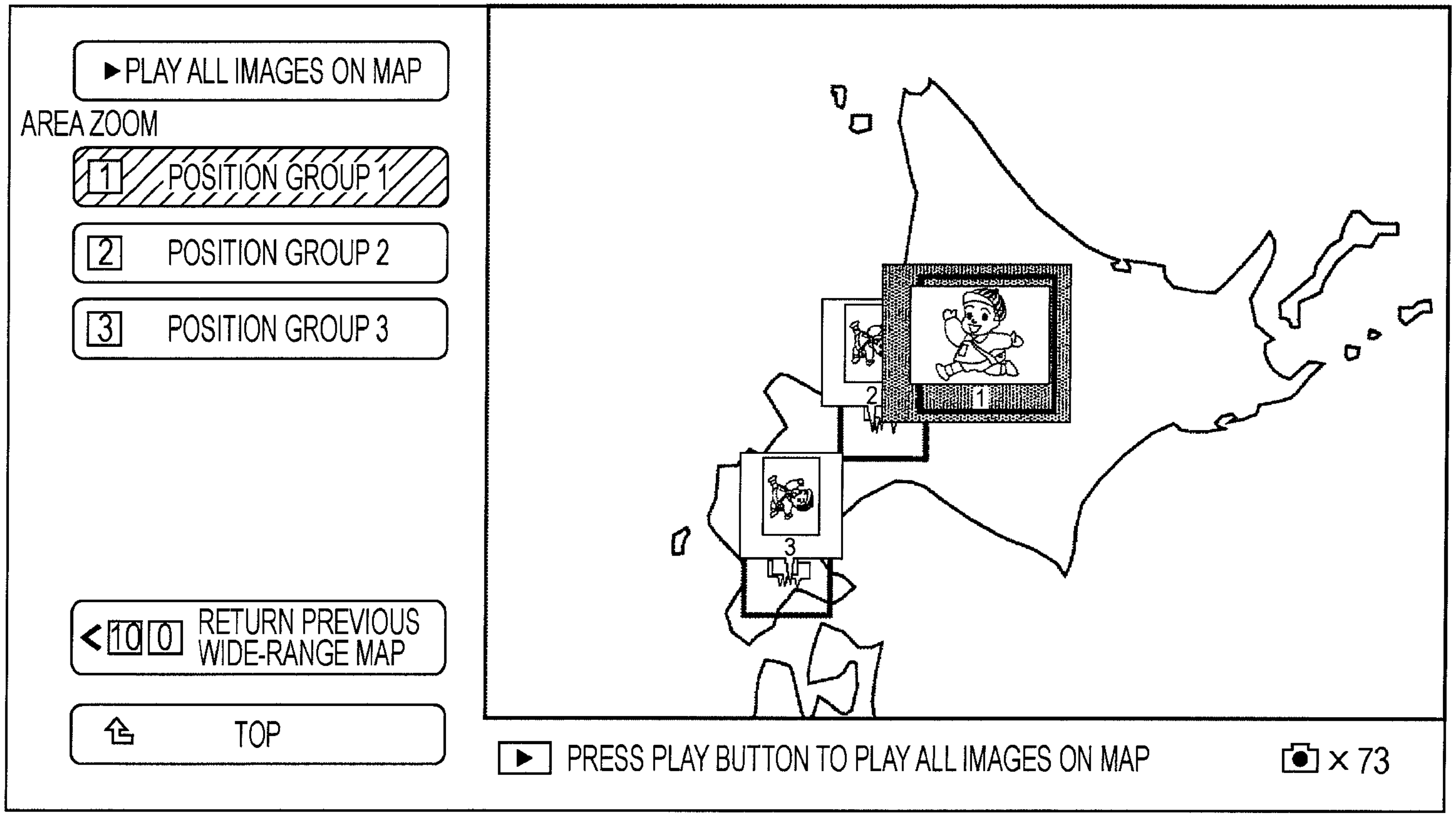
▶PLAY ALL IMAGES ON MAP
AREA ZOOM
1 POSITION GROUP 1
2 POSITION GROUP 2
3 POSITION GROUP 3
< 10 0 RETURN PREVIOUS WIDE-RANGE MAP
TOP
1
2
3
▶ PRESS PLAY BUTTON TO PLAY ALL IMAGES ON MAP
× 73

FIG. 20

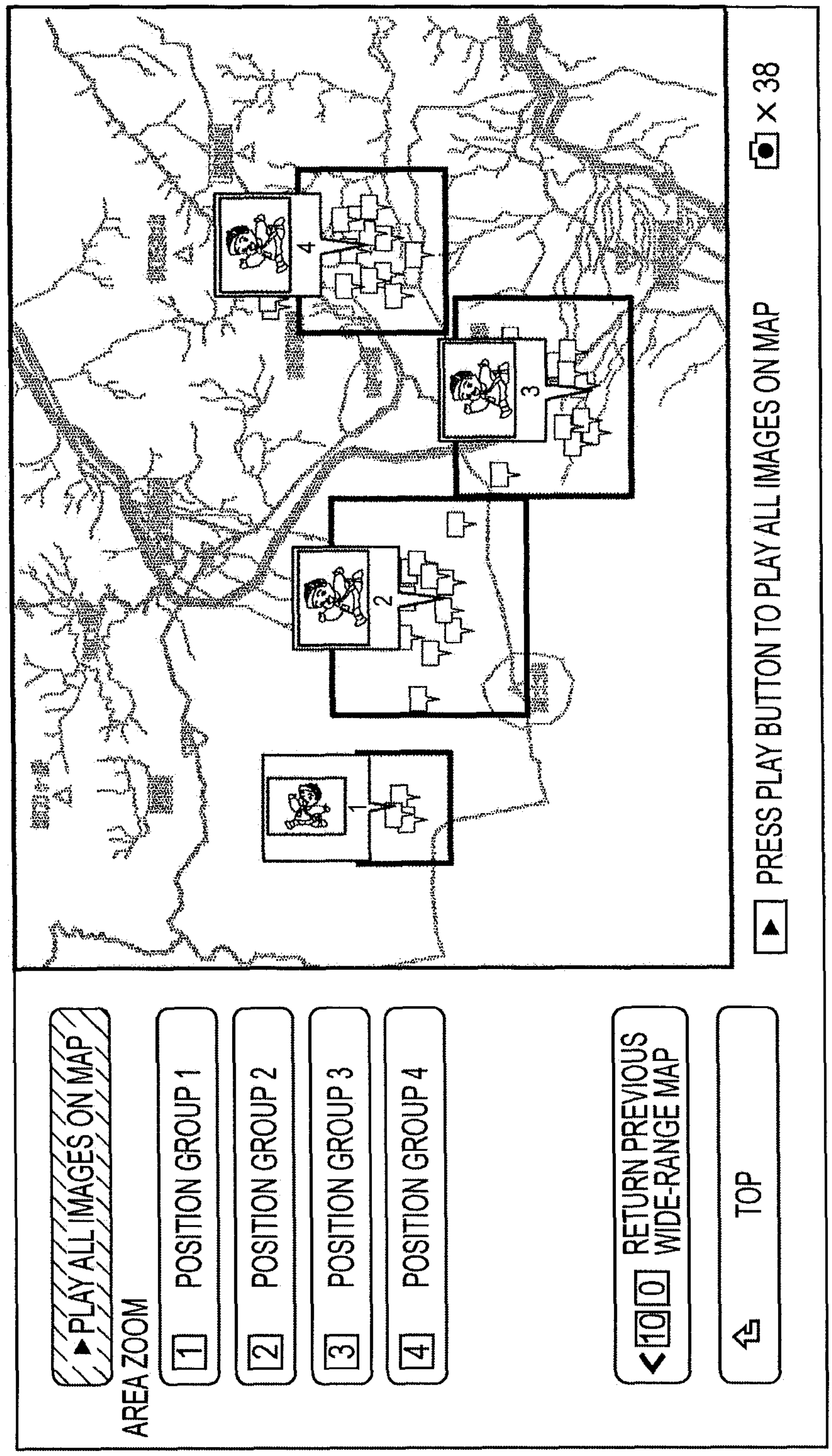
▶PLAY ALL IMAGES ON MAP
AREA ZOOM
1 POSITION GROUP 1
2 POSITION GROUP 2
3 POSITION GROUP 3
4 POSITION GROUP 4
10 0 RETURN PREVIOUS WIDE-RANGE MAP
TOP
1
2
3
4
▶ PRESS PLAY BUTTON TO PLAY ALL IMAGES ON MAP
× 38

FIG. 21

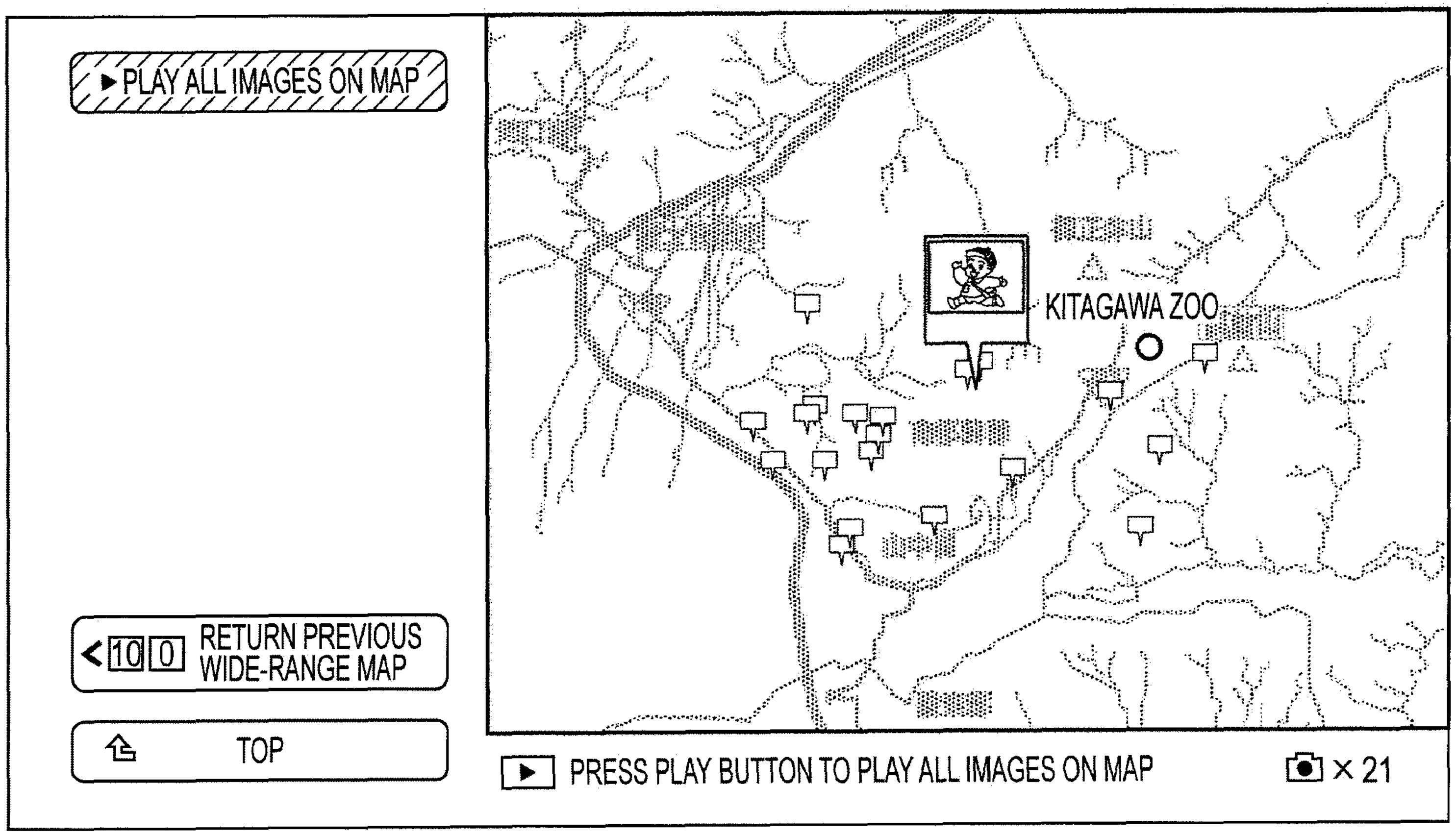
▶ PLAY ALL IMAGES ON MAP
KITAGAWA ZOO
< 10 0 RETURN PREVIOUS WIDE-RANGE MAP
TOP
▶ PRESS PLAY BUTTON TO PLAY ALL IMAGES ON MAP
× 21

FIG. 22

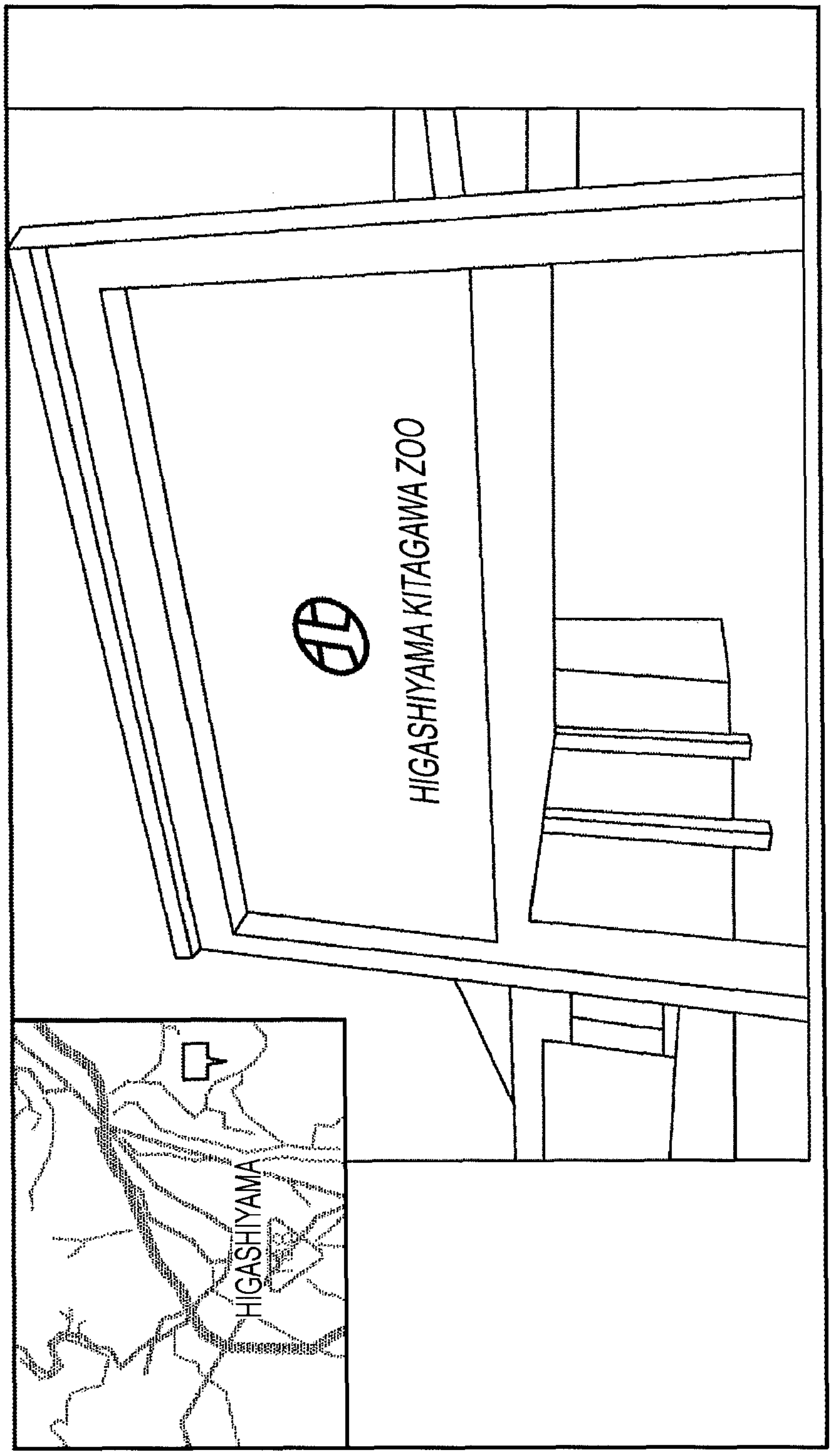

FIG. 23

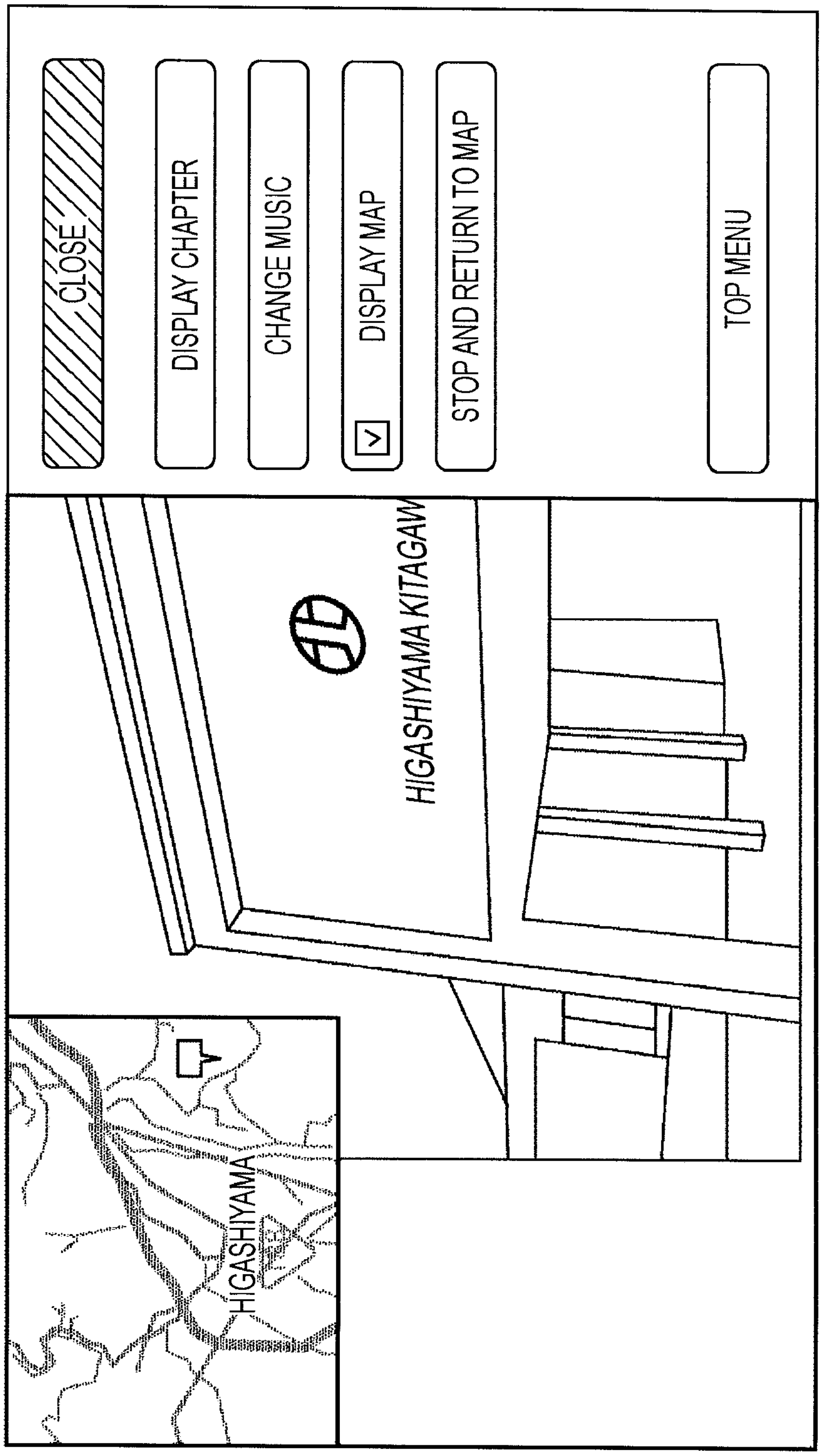
CLOSE
DISPLAY CHAPTER
CHANGE MUSIC
DISPLAY MAP
STOP AND RETURN TO MAP
TOP MENU
HIGASHIYAMA KITAGAW
HIGASHIYAMA

FIG. 24

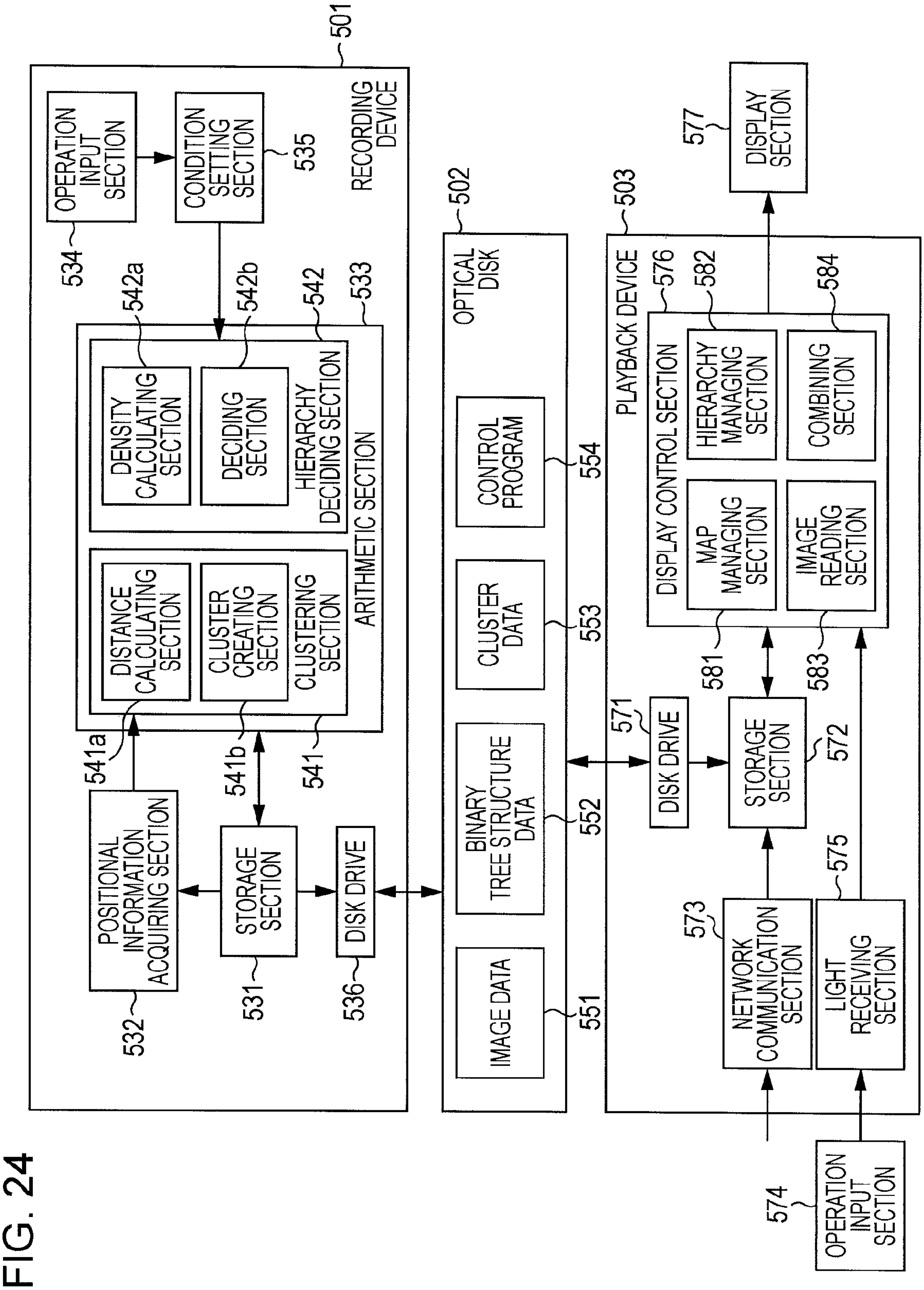
501
RECORDING DEVICE
534
OPERATION INPUT SECTION
535
CONDITION SETTING SECTION
533
ARITHMETIC SECTION
542
HIERARCHY DECIDING SECTION
542a
DENSITY CALCULATING SECTION
542b
DECIDING SECTION
541
CLUSTERING SECTION
541a
DISTANCE CALCULATING SECTION
541b
CLUSTER CREATING SECTION
532
POSITIONAL INFORMATION ACQUIRING SECTION
531
STORAGE SECTION
536
DISK DRIVE
502
OPTICAL DISK
551
IMAGE DATA
552
BINARY TREE STRUCTURE DATA
553
CLUSTER DATA
554
CONTROL PROGRAM
503
PLAYBACK DEVICE
571
DISK DRIVE
572
STORAGE SECTION
573
NETWORK COMMUNICATION SECTION
575
LIGHT RECEIVING SECTION
574
OPERATION INPUT SECTION
576
DISPLAY CONTROL SECTION
581
MAP MANAGING SECTION
582
HIERARCHY MANAGING SECTION
583
IMAGE READING SECTION
584
COMBINING SECTION
577
DISPLAY SECTION

FIG. 25

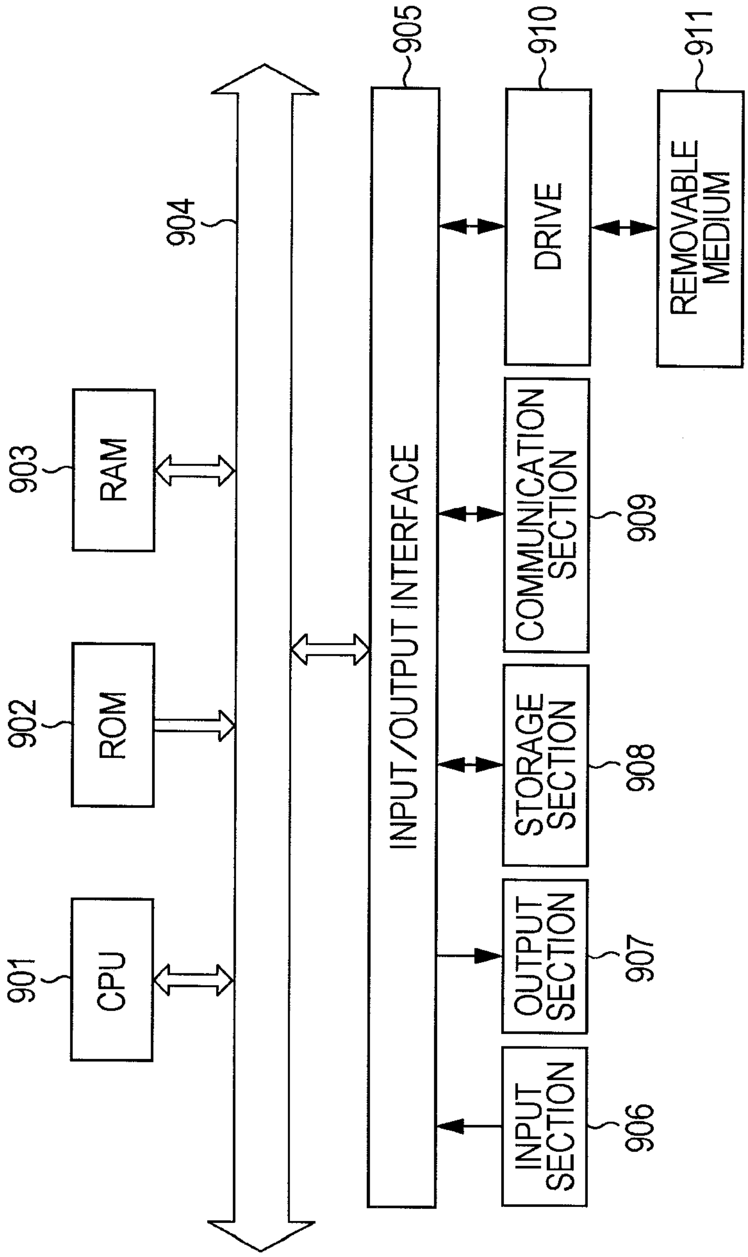
901
CPU
902
ROM
903
RAM
904
905
INPUT/OUTPUT INTERFACE
906
INPUT SECTION
907
OUTPUT SECTION
908
STORAGE SECTION
909
COMMUNICATION SECTION
910
DRIVE
911
REMOVABLE MEDIUM

Europäisches Patentamt
European Patent Office
Office européen des brevets

# EUROPEAN SEARCH REPORT

Application Number
EP 09 17 9156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/253663 A1 (GOTOH TOMOHIKO [JP] ET AL) 16 October 2008 (2008-10-16)<br>* paragraph [0069] - paragraph [0070] *<br>* paragraph [0087] - paragraph [0088]; figure 10 *<br>* paragraph [0116]; figure 19 *<br>* paragraph [0225]; figure 1B *<br>----- | 1-10 | INV.<br>G06F17/30 |
| X | US 2007/271297 A1 (JAFFE ALEXANDER B [US] ET AL) 22 November 2007 (2007-11-22)<br>* paragraph [0010] - paragraph [0012] *<br>* paragraph [0051] *<br>* paragraph [0057] - paragraph [0062] *<br>----- | 1-10 | |
| X | US 2007/115373 A1 (GALLAGHER ANDREW C [US] ET AL) 24 May 2007 (2007-05-24)<br>* paragraph [0089] *<br>* paragraph [0096] *<br>* paragraph [0081] *<br>----- | 1,9-10 | |
| A | EP 1 806 665 A2 (SONY CORP [JP]) 11 July 2007 (2007-07-11)<br>* paragraph [0085]; figure 13 *<br>* paragraph [0044] *<br>----- | 1,9-10 | TECHNICAL FIELDS SEARCHED (IPC)<br>G06F |

The present search report has been drawn up for all claims

2

| Place of search | Date of completion of the search | Examiner |
|---|---|---|
| Munich | 29 March 2010 | Deane, Inigo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 09 17 9156

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2010

| Patent document cited in search report | Publication date | Patent family member(s) | Publication date |
|---|---|---|---|
| US 2008253663 A1 | 16-10-2008 | CN 101276374 A | 01-10-2008 |
| | | JP 4412342 B2 | 10-02-2010 |
| | | JP 2008250605 A | 16-10-2008 |
| | | KR 20080089191 A | 06-10-2008 |
| US 2007271297 A1 | 22-11-2007 | NONE | |
| US 2007115373 A1 | 24-05-2007 | EP 1955218 A1 | 13-08-2008 |
| | | JP 2009518704 T | 07-05-2009 |
| | | WO 2007061728 A1 | 31-05-2007 |
| EP 1806665 A2 | 11-07-2007 | CN 1979490 A | 13-06-2007 |
| | | JP 2007156848 A | 21-06-2007 |
| | | KR 20070060001 A | 12-06-2007 |
| | | US 2007211151 A1 | 13-09-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005110111 A
- JP 2008317914 A